# EUROPÄISCHE PATENTANMELDUNG

(11) **EP 4 674 562 A1**
(43) Veröffentlichungstag der Anmeldung: **07.01.2026**
(21) Anmeldenummer: 25185448.5
(22) Anmeldetag: 26.06.2025
(51) Int. Cl.: B23K 37/02, B23K 9/167, B23K 9/02

(54) **ORBITALSCHWEISSVORRICHTUNG MIT ZWISCHEN GEÖFFNETER UND GESCHLOSSENER STELLUNG VERSTELLBAREM SCHWEISSKOPF**

(30) Priorität: 28.06.2024 DE 102024118372
(71) Anmelder: Viega Technology GmbH & Co. KG, 57439 Attendorn (DE)
(72) Erfinder: Knupfer, Daniel, 7205 Zizers (CH)
(74) Vertreter: Cohausz & Florack

(57) **Zusammenfassung**

Die Erfindung betrifft eine Orbitalschweißvorrichtung (100, 101), mit einem Schweißkopf (104), der eine Aufnahme (106) zur Positionierung eines Fügebereichs (150) zweier zumindest im Fügebereich (150) rohrförmiger Fügepartner, insbesondere eines Fittings (152) und eines Rohrendes (154), aufweist, wobei der Schweißkopf (104) eine erste Öffnung (166) und eine der ersten Öffnung (166) gegenüberliegende zweite Öffnung (168) aufweist, zwischen denen sich die Aufnahme (106) erstreckt, und wobei der Schweißkopf (104) zwischen einer geöffneten Stellung und einer geschlossenen Stellung verstellbar ist, wobei der Schweißkopf (104) in der geöffneten Stellung eine die erste und zweite Öffnung (166, 168) verbindende Einführöffnung (164) zum Einführen eines Fügebereichs (150) zweier zumindest im Fügebereich (150) rohrförmiger Fügepartner in die Aufnahme (106) aufweist, und wobei die Einführöffnung (164) in der geschlossenen Stellung zumindest teilweise geschlossen ist. Die Erfindung betrifft weiter ein System (700) mit einer solchen Orbitalschweißvorrichtung (100, 101) sowie ein Orbitalschweißverfahren.

## Beschreibung

Die vorliegende Erfindung betrifft eine Orbitalschweißvorrichtung mit einem Schweißkopf, der eine Aufnahme zur Positionierung eines Fügebereichs zweier zumindest im Fügebereich rohrförmiger Fügepartner, insbesondere eines Fittings und eines Rohrendes, aufweist. Die vorliegende Erfindung betrifft weiter ein System mit einer solchen Orbitalschweißvorrichtung sowie ein Orbitalschweißverfahren.

Im Stand der Technik werden lichtbogenbasierte Orbitalschweißverfahren, insbesondere Wolfram-Inertgas-Schweißverfahren (WIG-Schweißverfahren), zum Beispiel zum stoffschlüssigen Verbinden von Rohren eingesetzt. Hierbei werden die zu verbindenden Rohrenden, typischerweise im Stumpfstoß, nebeneinander angeordnet und miteinander verschweißt, indem das Schweißwerkzeug in Umfangsrichtung der Rohre (orbital) um die Fügestelle herumgeführt wird. Die Führung des Schweißbrenners kann händisch oder automatisch erfolgen.

Auf der Außenseite der Rohre können Anlauffarben durch das beim WIG-Schweißen verwendete Schutzgas weitestgehend unterdrückt werden, wobei es nach dem Schweißprozess jedoch durch die Restwärme im Werkstück noch zur Oxidation kommen kann. Um die Innenoberfläche der Rohre vor einer Oxidation zu schützen sind zusätzliche weitere Maßnahmen erforderlich, wie zum Beispiel das Spülen der Rohre mit Formiergas.

Das Orbitalschweißen von Kupferrohren hat sich als in dieser Hinsicht als besonders schwierig herausgestellt. Aufgrund der guten Wärmeleitfähigkeit von Kupfer wird die beim Schweißprozess von außen in das Material eingebrachte Wärme schnell abgeleitet, wodurch höhere Energiemengen erforderlich werden, um die notwendigen Temperaturen an der Schweißstelle zu erreichen. Dies geht mit einem höheren Energiebedarf einher, was den Einsatz von batteriegetriebenen Schweißgeräten erschwert. Darüber hinaus führt die hohe Wärmeleitfähigkeit des Kupfers zu einer starken Erwärmung der Rohrinnenfläche und damit zu einer besonders hohen Anfälligkeit für Anlauffarben und Oxidation auf der Rohrinnenseite.

Es wurde festgestellt, dass sich der Orbitalschweißprozess dahingehend optimieren lässt, dass es, auch beim Schweißen von Kupfer, zu einer geringeren Erwärmung der Rohrinnenfläche und damit zu einer geringeren Anfälligkeit für Anlauffarben und Oxidation auf der Rohrinnenseite kommt. Dabei hat sich herausgestellt, dass für eine solche Prozessoptimierung besonders eine möglichst präzise Ausrichtung von Elektrode und Fügepartnern sowie eine möglichst präzise Elektrodenführung während des Schweißvorgangs vorteilhaft sind. Die bekannten Orbitalschweißvorrichtungen sind jedoch hinsichtlich der Präzision verbesserungswürdig und/oder recht groß bzw. komplex, so dass sie insbesondere für als Handgerät ausgebildete Orbitalschweißvorrichtungen nicht gut geeignet sind.

Vor diesem Hintergrund liegt der vorliegenden Erfindung die Aufgabe zu Grunde, eine Orbitalschweißvorrichtung, ein System mit einer solchen Orbitalschweißvorrichtung sowie ein Orbitalschweißverfahren zur Verfügung zu stellen, mit denen zumindest einige der zuvor genannten Probleme reduziert oder vermieden werden können.

Die zuvor genannte Aufgabe wird erfindungsgemäß gelöst durch eine Orbitalschweißvorrichtung, mit einem Schweißkopf, der eine Aufnahme zur Positionierung eines Fügebereichs zweier zumindest im Fügebereich rohrförmiger Fügepartner, insbesondere eines Fittings und eines Rohrendes, aufweist, wobei der Schweißkopf eine erste Öffnung und eine der ersten Öffnung gegenüberliegende zweite Öffnung aufweist, zwischen denen sich die Aufnahme erstreckt, wobei der Schweißkopf zwischen einer geöffneten Stellung und einer geschlossenen Stellung verstellbar ist, wobei der Schweißkopf in der geöffneten Stellung eine die erste und zweite Öffnung verbindende Einführöffnung zum Einführen eines Fügebereichs zweier zumindest im Fügebereich rohrförmiger Fügepartner in die Aufnahme aufweist, und wobei die Einführöffnung in der geschlossenen Stellung zumindest teilweise geschlossen ist.

Ein derart verstellbarer Schweißkopf erleichtert dem Bediener in der geöffneten Stellung das Ansetzen der Orbitalschweißvorrichtung an die zu verbindenden Fügepartner bzw. das Anordnen des Fügebereichs der Fügepartner in der Aufnahme. Weiterhin ermöglicht die geschlossene Stellung einen besseren Einschluss der Aufnahme, so dass sich die Fügepartner besser in der Aufnahme fixieren lassen und der eigentliche Orbitalschweißprozess besser nach außen abgeschirmt werden kann.

Die Aufnahme erstreckt sich zwischen der ersten und zweiten Öffnung insbesondere in Längserstreckung. Auf diese Weise können sich zwei mit dem Fügebereich in der Aufnahme anzuordnende Fügepartner, insbesondere ein Fitting und ein Rohrende, aus der ersten und zweiten Öffnung heraus erstrecken.

Die Aufnahme des Schweißkopfs der Orbitalschweißvorrichtung ist zur Positionierung eines Fügebereichs zweier zumindest im Fügebereich rohrförmiger Fügepartner. Beide Fügepartner haben jeweils einen Fügebereich, in dem die Fügepartner miteinander verschweißt werden sollen. Im Fall eines Aufsteckfittings kann der Fügebereich des Fittings zum Beispiel einen Bereich an der Fittingöffnung umfassen und der Fügebereich eines damit zu verschweißenden Rohrendes den Bereich des Rohrendes umfassen, der bei aufgeschobenem Fitting bei der Fittingöffnung angeordnet ist. Im Fall eines Einsteckfittings kann der Fügebereich des Fittings zum Beispiel einen Bereich an einer Anschlagkante für ein Rohrende umfassen und der Fügebereich eines damit zu verschweißenden Rohrendes den Bereich der Rohröffnung umfassen, die bei eingeführtem Fitting an die Anschlagkante anschlägt. Der Fügebereich des Fittings und der Fügebereich des Rohrendes, allgemeiner die jeweiligen Fügebereiche der beiden Fügepartner, bilden zusammen den Fügebereich der zwei Fügepartner.

Neben den beiden Fügepartnern können grundsätzlich auch weitere Fügepartner vorgesehen sein.

Der Schweißkopf umgibt die Aufnahme insbesondere zumindest abschnittsweise in azimutaler Richtung.

Die Einführöffnung bildet insbesondere einen azimutalen Einführbereich. Auf diese Weise können die beiden Fügepartner mit dem Fügebereich in der geöffneten Stellung durch die Einführöffnung in die Aufnahme eingeführt werden, d.h. der Schweißkopf kann insbesondere seitlich auf die Fügepartner, insbesondere ein Rohrende und einen Fitting, aufgesetzt werden, insbesondere wenn diese bereits zueinander angeordnet, beispielsweise ineinandergesteckt sind. In der geschlossenen Stellung können die beiden Fügepartner mit dem Fügebereich in der Aufnahme insbesondere fixiert werden. Vorzugsweise ist die Einführöffnung in der geschlossenen Stellung vollständig geschlossen. Auf diese Weise wird ein besserer Schutz des Nutzers vor UV- oder Schweißrauchbelastung erreicht. Weiterhin kann das Austreten von Schutzgas weitgehend vermieden werden.

Die Orbitalschweißvorrichtung umfasst vorzugsweise eine Verstellmechanik und eine Verschlussbetätigung zur Betätigung der Verstellmechanik, wobei die Verstellmechanik dazu eingerichtet ist, den Schweißkopf zwischen der geöffneten Stellung und der geschlossenen Stellung zu verstellen. Die Verschlussbetätigung ist vorzugsweise mechanisch bedienbar. Die Verstellmechanik kann insbesondere ein oder mehrere, vorzugsweise gegenläufig angetriebene Verschluss-Ringsegmente umfassen.

Die zuvor genannte Aufgabe wird erfindungsgemäß weiterhin gelöst durch ein System mit der zuvor beschriebenen Orbitalschweißvorrichtung oder einer Ausführungsform davon und mit einem Fitting. Der Fitting ist insbesondere dazu ausgebildet, zusammen mit der Orbitalschweißvorrichtung zur Herstellung einer stoffschlüssigen Verbindung des Fittings zu einem Fügepartner, insbesondere einem Rohrende, mittels Orbitalschweißen verwendet zu werden. Zu diesem Zweck ist der Fitting vorzugsweise an die Geometrie der Orbitalschweißvorrichtung angepasst. Insbesondere können der Fitting und der Schweißkopf der Orbitalschweißvorrichtung zueinander korrespondierende Konturen, wie eine Außenkontur des Fittings und eine korrespondierende Fittingfixierungskontur des Schweißkopf, aufweisen, um den Fitting in einer vorgegebenen Fittingposition im Schweißkopf zu positionieren. Die Fittingposition ist vorzugsweise derart, dass der Fügebereich des Fittings, beispielsweise eine Kante des Fittings, an der der Fitting mit dem Rohrende verschweißt werden soll, im Bereich eines vorzugsweise vorgesehenen Elektroden-Ringsegments bzw. im Bereich der Schweißelektrode angeordnet ist, insbesondere mit einem vorgegebenen Abstand, beispielsweise von weniger als 1,5 mm, insbesondere weniger als 1,2 mm, zwischen der Spitze der Schweißelektrode und der Kante des Fittings. Zusätzlich oder alternativ können der Schweißkopf und der Fitting dazu ausgebildet sein, den Fitting kraftschlüssig in der vorgegebenen Fittingposition zu halten. Zu diesem Zweck kann im Schweißkopf beispielsweise ein Fixierungselement aus einem Elastomer angeordnet sein, das eine Fixierungsfläche bildet, an die der Fitting in der geschlossenen Stellung des Schweißkopfs angedrückt wird.

Der Fitting kann insbesondere einen Fittingkörper aus Metall, beispielsweise aus Kupfer oder einer Kupferlegierung aufweisen. Insbesondere kann der Fittingkörper die Außenkontur des Fittings bilden.

Die zuvor genannte Aufgabe wird erfindungsgemäß weiterhin gelöst durch ein Orbitalschweißverfahren, durchgeführt mit einer Orbitalschweißvorrichtung, insbesondere mit der zuvor beschrieben Orbitalschweißvorrichtung oder einer Ausführungsform davon, bei dem zwei zumindest in einem Fügebereich rohrförmige Fügepartner zueinander angeordnet werden, insbesondere im Überlappstoß, und bei dem im Fügebereich eine in Umfangsrichtung der Fügepartner verlaufende Kette von Fügepunkten (Schweißpunkten) erzeugt wird, die die Fügepartner stoffschlüssig verbindet.

Bei einer Ausführungsform des Verfahrens wird der Fügebereich der Fügepartner bei geöffneter Stellung des Schweißkopfs durch die Einführöffnung in die Aufnahme eingeführt und die Fügepartner werden durch Verstellen des Schweißkopfs in die geschlossene Stellung in der Aufnahme fixiert, bevor die Kette von Fügepunkten erzeugt wird. Auf diese Weise kann eine vorgegebene Ausrichtung des Fügebereichs zur Schweißelektrode während der Erzeugung der Kette von Fügepunkten sichergestellt werden, wodurch die Schweißqualität erhöht wird.

Im Folgenden werden verschiedene Ausführungsformen der Orbitalschweißvorrichtung, des System und des Orbitalschweißverfahrens beschrieben, wobei die einzelnen Ausführungsformen jeweils unabhängig voneinander für die Orbitalschweißvorrichtung, das System und das Orbitalschweißverfahren gelten. Darüber hinaus können die einzelnen Ausführungsformen beliebig miteinander kombiniert werden.

Bei einer Ausführungsform weist der Schweißkopf ein oder mehrere Verschluss-Ringsegmente auf, von denen jedes in Umfangsrichtung eine jeweilige Ringsegment-Öffnung aufweist und in Umfangsrichtung um die Aufnahme angeordnet und derart gelagert ist, dass das jeweilige Verschluss-Ringsegment um eine gedachte Längsachse der Aufnahme drehbar ist. Weiter bevorzugt ist jedes der ein oder mehreren Verschluss-Ringsegmente in der geöffneten Stellung in einer geöffneten Drehposition positioniert, in der die jeweilige Ringsegment-Öffnung einen Teil der Einführöffnung bildet, und in der geschlossenen Stellung in einer geschlossenen Drehposition positioniert, in der das jeweilige Verschluss-Ringsegment die Einführöffnung zumindest teilweise verschließt. Dieser Mechanismus ermöglicht das Verstellen des Schweißkopfes zwischen geöffneter und geschlossener Stellung in einfacher, zuverlässiger und insbesondere bauraumsparender Weise. Dadurch kann der Schweißkopf kompakt ausgebildet werden, was insbesondere bei schwierigen Montagesituationen und bei einem Schweißkopf als Teil eines Handgeräts vorteilhaft ist.

Umfasst der Schweißkopf mehrere Verschluss-Ringsegmente, so können die Verschluss-Ringsegmente insbesondere um dieselbe gedachte Längsachse der Aufnahme drehbar sein. Ebenso ist es denkbar, dass die Verschluss-Ringsegmente um eine jeweilige gedachte Längsachse der Aufnahme drehbar sind, wobei die gedachten Längsachsen verschiedener Verschluss-Ringsegmente versetzt zueinander angeordnet sein können. Beispielsweise können ein oder mehrere obere der Verschluss-Ringsegmente um eine erste und ein oder mehrere untere der Verschluss-Ringsegmente um eine zweite gedachte Längsachse der Aufnahme drehbar sein, die vorzugsweise in einem Abstand parallel zu der ersten gedachten Längsachse verläuft.

Die ein oder mehreren gedachten Längsachsen der Aufnahme verlaufen insbesondere durch die Aufnahme hindurch.

Die ein oder mehreren Verschluss-Ringsegmente können insbesondere auch zur Fixierung der in der Aufnahme angeordneten Fügepartner dienen und weisen zu diesem Zweck vorzugsweise jeweils eine zur Aufnahme gerichtete Innenkontur, beispielsweise als Teil einer Fittingfixierungskontur, zur Anlage an einen der Fügepartner auf.

Bei einer Ausführungsform weist der Schweißkopf mehrere Verschluss-Ringsegmente auf und die Drehrichtung von der geöffneten Drehposition in die geschlossene Drehposition von mindestens zweien der mehreren Verschluss-Ringsegmente, insbesondere von zwei in Längsrichtung nebeneinander angeordneten Verschluss-Ringsegmenten, ist gegenläufig. Auf diese Weise bewegen sich die Enden dieser Verschluss-Ringsegmente an den jeweiligen Ringsegment-Öffnungen beim Verstellen von der geöffneten in die geschlossene Drehposition aufeinander zu. Dies ermöglicht eine kompaktere Ausgestaltung, da die einzelnen Verschluss-Ringsegmente sich auf diese Weise lediglich über einen Teil der Einführöffnung, beispielsweise lediglich etwa bis zur Mitte der Einführöffnung, verstellen müssen, um die Einführöffnung zu verschließen. Weiterhin ermöglicht eine solche gegenläufige Drehbewegung eine symmetrische Fixierung und insbesondere Zentrierung der Fügepartner in der Aufnahme.

Bei einer Ausführungsform sind ein oder mehrere erste der ein oder mehreren Verschluss-Ringsegmente im Bereich der ersten Öffnung und/oder ein oder mehrere zweite der ein oder mehreren Verschluss-Ringsegmente im Bereich der zweiten Öffnung angeordnet. Auf diese Weise wird ein symmetrisches Verschließen der Einführöffnung in Bezug auf die Längsachse der Aufnahme erreicht. Vorzugsweise können auf diese Weise beide Fügepartner durch die Verschluss-Ringsegmente fixiert werden.

Weiter bevorzugt ist jeweils ein erstes Verschluss-Ringsegment mit einer ersten Drehrichtung und ein weiteres Verschluss-Ringsegment mit einer demgegenüber gegenläufigen Drehrichtung im Bereich der ersten Öffnung und/oder zweiten Öffnung angeordnet. Auf diese Weise ist eine symmetrische beidseitige Fixierung der Fügepartner an der ersten und/oder zweiten Öffnung möglich.

Vorzugsweise sind die ein oder mehreren ersten Verschluss-Ringsegmente im Bereich der ersten Öffnung und/oder die ein oder mehreren zweiten Verschluss-Ringsegmente im Bereich der zweiten Öffnung dazu eingerichtet, einen daran anliegenden Fügepartner, insbesondere Fitting oder Rohrende, zu verspannen. Zu diesem Zweck können die ein oder mehreren Verschluss-Ringsegmente zum Beispiel federnd ausgebildet sein. Die Verschluss-Ringsegmente können dann mit einer Verspannkraft an dem entsprechenden Fügepartner anliegen und diesen auf diese Weise verspannen. Auf diese Weise kann ein guter elektrischer Kontakt zwischen den Verschluss-Ringsegmenten und dem jeweiligen Fügepartner sichergestellt werden. Durch das Verspannen des betreffenden Fügepartners kann zudem eine kraftschlüssige Fixierung in Umfangsrichtung erreicht werden.

Bei einer Ausführungsform ist mit ein oder mehreren oberen der ein oder mehreren Verschluss-Ringsegmente eine obere Abdeckung und/oder mit ein oder mehreren unteren der ein oder mehreren Verschluss-Ringsegmente eine untere Abdeckung drehfest verbunden, wobei die obere und/oder untere Abdeckung in der geöffneten Stellung des Schweißkopfs die Einführöffnung freigeben und in der geschlossenen Stellung des Schweißkopfs die Einführöffnung zumindest teilweise verschließen. Auf diese Weise kann die Einführöffnung im Wesentlichen derart verschlossen werden, dass in der geschlossenen Stellung des Schweißkopfs die Aufnahme im Bereich der Schweißelektrode in Umfangsrichtung vorzugsweise im Wesentlichen vollständig geschlossen ist. Auf diese Weise kann der Orbitalschweißprozess in einem im Wesentlichen geschlossenen Raumbereich und damit unter kontrollierten Bedingungen durchgeführt werden. Weiterhin kann auf diese Weise das beim Orbitalschweißprozess verwendete Schutzgas im Fügebereich gehalten werden. Weiterhin kann die Umgebung auf diese Weise vor beim Orbitalschweißprozess entstehenden Rauchgasen und UV-Strahlung geschützt werden.

Bei einer Ausführungsform ist einer, mehrere oder jeder der Verschluss-Ringsegmente mit einem Getriebe, insbesondere Zahnradgetriebe, gekoppelt, über das das betreffende Verschluss-Ringsegment zwischen der geöffneten Drehposition und der geschlossenen Drehposition verstellbar ist. Durch das Koppeln mehrerer oder aller Verschluss-Ringsegmente mit dem Getriebe kann eine synchrone Verstellung der Verschluss-Ringsegmente erreicht werden. Zur Kopplung mit dem Getriebe können die Verschluss-Ringsegmente vorzugsweise jeweils eine Verzahnung, insbesondere in Form eines Zahnkranzsegments, aufweisen, das mit dem Getriebe in Eingriff steht. Das Getriebe kann insbesondere ein oder mehrere Zahnräder aufweisen.

Bei einer Ausführungsform ist ein Betätigungselement vorgesehen, mit dem die ein oder mehreren Verschluss-Ringsegmente zwischen der geöffneten Drehposition und der geschlossenen Drehposition verstellbar sind. Insbesondere können die Verschluss-Ringsegmente über das zuvor beschriebene Getriebe mit dem Betätigungselement gekoppelt sein. Das Betätigungselement ist vorzugsweise manuell bedienbar. Auf diese Weise können die Verschluss-Ringsegmente durch Betätigung des Betätigungselements in synchroner Weise zwischen der geöffneten und geschlossenen Drehposition verstellt werden. Das Betätigungselement kann auch elektrisch angetrieben sein, insbesondere mit einem Motor. Auf diese Weise kann die Betätigung des Betätigungselements automatisch erfolgen, beispielsweise nach einer Nutzereingabe über eine Nutzerschnittstelle, zum Beispiel nach Drücken eines entsprechenden Tasters.

Das Betätigungselement kann beispielsweise in Form einer drehbaren Griffhülse ausgebildet sein, die zum Beispiel an einem sich quer zur Längserstreckung der Aufnahme erstreckenden Schaft, insbesondere eines Handgeräts, angeordnet werden kann. Die Drehachse der Griffhülse liegt vorzugsweise quer zur gedachten Drehachse der ein oder mehreren Verschluss-Ringsegmente. Dies ermöglicht dem Nutzer eine einfache und ergonomische Betätigung des Betätigungselements.

Das Betätigungselement kann insbesondere ein Kronenrad aufweisen, das mit ein oder mehreren Zahnrädern des zuvor beschriebenen Getriebes gekoppelt ist. Auf diese Weise kann in bauraumsparender Weise eine Umlenkung der Drehbewegung von der Drehachse des Betätigungselements in die Drehachse der ein oder mehreren Verschluss-Ringsegmente erfolgen. Vorzugsweise sind ein erstes und ein zweites Zahnrad vorgesehen, wobei das erste und das zweite Zahnrad aneinander gegenüberliegenden Seiten des Kronenrads mit dem Kronenrad kämmen, wobei das erste Zahnrad mit ein oder mehreren im Bereich der ersten Öffnung angeordneten Verschluss-Ringsegmenten und das zweite Zahnrad mit ein oder mehreren im Bereich der zweiten Öffnung angeordneten Verschluss-Ringsegmenten gekoppelt ist. Dies ermöglicht in bauraumsparender Weise ein synchrones Verstellen der im Bereich der ersten und zweiten Öffnung angeordneten Verschluss-Ringsegmente mit dem Betätigungselement.

Das erste und/oder das zweite Zahnrad ist vorzugsweise drehfest mit einem weiteren, insbesondere kleineren, Zahnrad verbunden, dass über ein Zwischenzahnrad mit einem der Verschluss-Ringsegmente gekoppelt ist. Durch das Zwischenzahnrad wird eine Drehrichtungsumkehr erreicht, so dass sich auf diese Weise in bauraumsparender Weise zwei nebeneinander angeordnete, gegenläufige Verschluss-Ringsegmente verstellen lassen.

Das Betätigungselement kann zum Beispiel auch in Form eines Hebels ausgebildet sein, mit dem die ein oder mehreren Verschluss-Ringsegmente angetrieben werden, beispielsweise über ein oder mehrere Zahnräder.

Bei einer Ausführungsform umfasst die Orbitalschweißvorrichtung ein Handgerät, das den Schweißkopf und vorzugsweise ein mit dem Schweißkopf verbundenes Griffteil umfasst. Vorzugsweise können auch eine Schweißstromquelle und eine Steuereinrichtung im Handgerät untergebracht werden. Zudem kann das Handgerät eine Batterie oder einen Akkumulator, eine Aufnahme oder einen Anschluss dafür, insbesondere für einen Wechselakkumulator, aufweisen. Beispielsweise kann ein Anschluss zum Anstecken eines Wechselakkumulators vorgesehen sein. Auf diese Weise wird eine flexible und einfache Bedienung der Orbitalschweißvorrichtung auch unter beengten Arbeitsbedingungen möglich.

Vorzugsweise ist die Orbitalschweißvorrichtung vollständig als Handgerät ausgebildet, insbesondere mit integriertem oder ansteckbarem Akkumulator, insbesondere Wechselakkumulator. Dies ermöglicht einen besonders flexiblen und einfachen Einsatz der Orbitalschweißvorrichtung.

Es ist auch denkbar, dass die Orbitalschweißvorrichtung neben dem Handgerät mindestens einen, zum Beispiel mittels eines Schlauchpakets mit dem Handgerät verbundenen, Koffer oder Rucksack umfasst, in dem Komponenten der Orbitalschweißvorrichtung wie zum Beispiel die Schweißstromquelle und/oder eine Batterie oder Akkumulator oder eine Aufnahme dafür angeordnet sind. Auf diese Weise kann das Handgerät kompakter und leichter ausgebildet werden, wodurch dessen Bedienung erleichtert wird. Gleichzeitig bleibt die Orbitalschweißvorrichtung mobil.

Bei einer Ausführungsform umfasst die Orbitalschweißvorrichtung einen Elektrodenumlaufmechanik und einen Elektrodenantrieb, insbesondere Motor, zum Antrieb der Elektrodenumlaufmechanik, wobei die Elektrodenumlaufmechanik dazu eingerichtet ist, eine Schweißelektrode oder eine Elektroden-Halterung dafür in Umfangsrichtung um die Aufnahme herum zu verfahren. Auf diese Weise kann die Schweißelektrode während des Orbitalschweißverfahrens automatisch und kontrolliert in Umfangsrichtung um den Fügebereich der in der Aufnahme angeordneten Fügepartner verfahren werden, um diese miteinander zu verschweißen, insbesondere mittels einer Kette von Fügepunkten.

Bei einer Ausführungsform weist der Schweißkopf ein Elektroden-Ringsegment auf, das in Umfangsrichtung um die Aufnahme angeordnet und derart gelagert ist, dass das Elektroden-Ringsegment um eine gedachte Längsachse der Aufnahme drehbar ist, wobei das Elektroden-Ringsegment eine Elektroden-Halterung für eine Schweißelektrode und/oder eine Schweißelektrode aufweist und wobei der Schweißkopf mehrere angetriebene Antriebsräder aufweist, die derart angeordnet sind, dass in jeder Drehstellung des Elektroden-Ringsegments um die gedachte Längsachse mindestens eines der mehreren Antriebsräder mit dem Elektroden-Ringsegment gekoppelt ist. Auf diese Weise lässt sich eine Schweißelektrode präzise in Umfangsrichtung um den Fügebereich zweier rohrförmiger Fügepartner verfahren. Insbesondere ermöglicht die beschriebene Mechanik eine so präzise Elektrodenführung, dass der Schweißprozess mit sehr geringen und genau eingehaltenen Abständen zwischen Schweißelektrodenspitze und einem oder beiden der Fügepartnern durchgeführt werden kann, wodurch eine bessere dahingehende Optimierung des Schweißverfahrens ermöglicht wird, um den Energiebedarf zu reduzieren und die Erwärmung der Rohrinnenfläche eines zu fügenden Rohrendes und damit die Anfälligkeit für Anlauffarben und Oxidation auf der Rohrinnenseite zu reduzieren.

Das Elektroden-Ringsegment und die Antriebsräder können insbesondere die Elektrodenumlaufmechanik der Orbitalschweißvorrichtung bzw. einen Teil davon bilden.

Bei einer Ausführungsform umfasst die Orbitalschweißvorrichtung eine Schweißstromquelle, die elektrisch mit dem Elektroden-Ringsegment, der Schweißelektrode und/oder der Elektroden-Halterung dafür verbunden ist. Weiterhin ist die Schweißstromquelle vorzugsweise mit ein oder mehreren Kontaktierungselementen zur Kontaktierung eines in der Aufnahme angeordneten Fügepartners verbunden. Auf diese Weise kann mit der Schweißstromquelle im Betrieb eine Spannung zwischen Schweißelektrode und Fügepartner angelegt werden. Die Schweißstromquelle ist vorzugsweise dazu eingerichtet, eine Zündspannung zur kontaktlosen Zündung eines Lichtbogens zwischen Schweißelektrode und Fügepartner bereit zu stellen. Weiterhin ist die Schweißstromquelle vorzugsweise dazu eingerichtet, einen Schweißstrom für den Orbitalschweißprozess bereitzustellen, insbesondere den Schweißstrom nach einer vorgegebenen oder vorgebbaren Schweißstromkennlinie zu regeln.

Bei einer Ausführungsform der Orbitalschweißvorrichtung ist eine Steuereinrichtung vorgesehen, die dazu eingerichtet ist, die Orbitalschweißvorrichtung derart zu steuern, dass mittels einer bzw. der Schweißelektrode an zwei in der Aufnahme angeordneten Fügepartnern eine Schweißnaht aus einer in Umfangsrichtung verlaufenden Kette von Fügepunkten erzeugt wird. Die Steuereinrichtung umfasst zu diesem Zweck vorzugsweise mindestens einen Prozessor und mindestens einen Speicher mit Befehlen, deren Ausführung auf dem mindestens einen Prozessor eine entsprechende Steuerung der Orbitalschweißvorrichtung bewirkt. Bei dem Speicher kann es sich zum Beispiel um einen ROM-Speicher oder einen RAM-Speicher handeln. Insbesondere kann die Steuereinrichtung der Orbitalschweißvorrichtung die Schweißstromquelle und/oder den Elektrodenantrieb steuern.

Bei einer Ausführungsform der Orbitalschweißvorrichtung ist eine Schweißkopf-Stellungs-Sensorik zur Detektion der geöffneten und/oder geschlossenen Stellung des Schweißkopfs vorgesehen. Die Schweißkopf-Stellungs-Sensorik kann beispielsweise dazu eingerichtet sein, die Stellung von einem oder mehreren der ein oder mehreren Verschluss-Ringsegmente zu erfassen. Zu diesem Zweck kann die Schweißkopf-Stellungs-Sensorik zum Beispiel zum Erfassen einer Stellung der ein oder mehreren Verschluss-Ringsegmente an den ein oder mehreren Verschluss-Ringsegmenten selbst oder an dem Getriebe, beispielsweise einem Zahnrad, zu deren Antrieb eingerichtet sein. Die Steuereinrichtung ist vorzugsweise dazu eingerichtet, die Orbitalschweißvorrichtung abhängig von Messwerten der Schweißkopf-Stellungs-Sensorik zu steuern, beispielsweise den Start eines Schweißprozesses nur dann zuzulassen, wenn die Schweißkopf-Stellungs-Sensorik die geschlossene Stellung des Schweißkopfs detektiert.

Weitere Merkmale und Vorteile der Orbitalschweißvorrichtung, des Systems und der Orbitalschweißverfahren ergeben sich aus der nachfolgenden Beschreibung von Ausführungsbeispielen, wobei auf die beigefügte Zeichnung Bezug genommen wird.

In der Zeichnung zeigen
- Fig. 1: ein erstes Ausführungsbeispiel der Orbitalschweißvorrichtung,
- Fig. 2a-d: den Schweißkopf der Orbitalschweißvorrichtung aus Fig. 1,
- Fig. 3: eine schematische Blockdarstellung der funktionalen Komponenten der Orbitalschweißvorrichtung aus Fig. 1,
- Fig. 4: eine schematische Blockdarstellung der Schweißstromquelle der Orbitalschweißvorrichtung aus Fig. 1,
- Fig. 5a-b: eine schematische Darstellung der Erzeugung eines Fügepunkts beim Orbitalschweißverfahren,
- Fig. 6a-c: ein Ausführungsbeispiel des Orbitalschweißverfahrens an einem Fitting und einem Rohrende,
- Fig. 7: ein weiteres Ausführungsbeispiel der Orbitalschweißvorrichtung und
- Fig. 8a-i: Detaildarstellungen des Schweißkopfs der Orbitalschweißvorrichtung aus Fig. 1 oder 7.

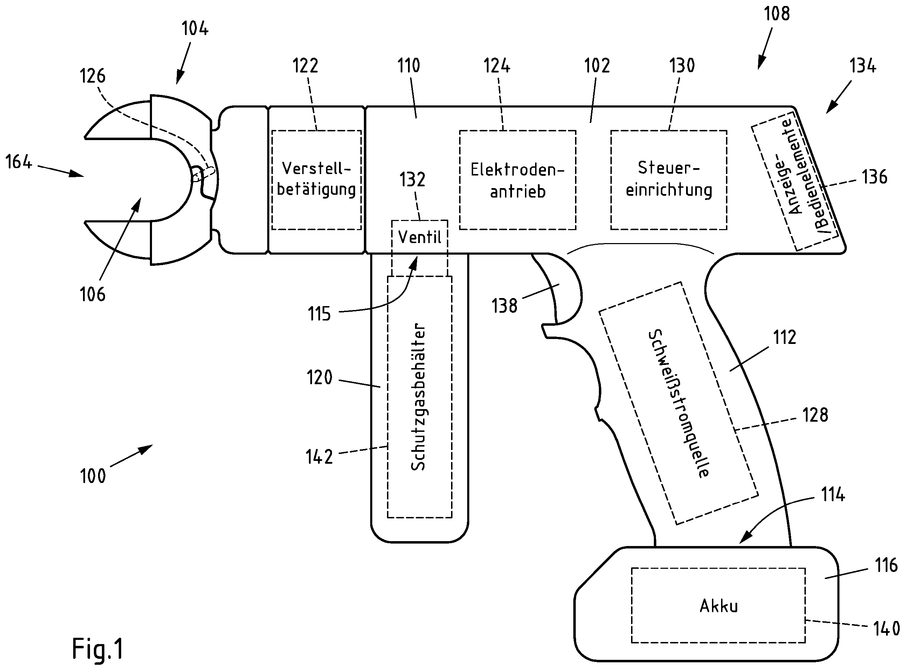

Fig. 1 zeigt ein Ausführungsbeispiel der Orbitalschweißvorrichtung in schematischer Darstellung.

Die Orbitalschweißvorrichtung 100 ist als mobile Schweißvorrichtung in Form eines Handgeräts 102 ausgebildet. Das Handgerät 102 umfasst bei dem vorliegenden Ausführungsbeispiel sämtliche Komponenten der Orbitalschweißvorrichtung 100, so dass die Orbitalschweißvorrichtung 100 sehr flexibel handhabbar ist, auch unter schwierigen Installationssituationen.

Das Handgerät 102 umfasst zunächst einen Schweißkopf 104, der eine Aufnahme 106 aufweist, in der ein Fügebereich zweier Fügepartner, beispielsweise eines Rohrendes und eines Fittings, angeordnet werden kann.

Weiterhin umfasst das Handgerät 102 ein Griffteil 108 mit einem Schaft 110, an dem der Schweißkopf 104 angeordnet ist, und mit einen Handgriff 112 zum Halten und Betätigen des Handgeräts 102. Der Handgriff 112 weist an seinem dem Schaft 110 gegenüberliegenden Ende einen Anschluss 114 für eine austauschbare Akkumulatoreinheit 116 auf. Der Schaft 110 weist weiter einen Anschluss 115 für ein austauschbares Schutzgasmagazin 120 auf.

In dem Griffteil 108 sind verschiedene Komponenten zum Betrieb der Orbitalschweißvorrichtung 100 untergebracht, nämlich insbesondere eine Verstellbetätigung 122 zum Verstellen des Schweißkopfs 104 zwischen einer geöffneten und einer geschlossenen Stellung, ein Elektrodenantrieb 124 zum Antrieb einer Schweißelektrode 126 im Schweißkopf 104, eine Schweißstromquelle 128 zur Bereitstellung der Zündspannung und des Schweißstroms für den Orbitalschweißprozess, eine Steuereinrichtung 130 zum Steuern der Orbitalschweißvorrichtung 100, ein Ventil 132 zur Steuerung der Schutzgaszufuhr sowie eine Nutzerschnittstelle 134 umfassend Anzeige- und Bedienelemente 136 zur Konfiguration der Orbitalschweißvorrichtung 100 sowie einen Brennertaster 138 zum Starten eines Orbitalschweißprozesses. Weiterhin umfassen die Akkumulatoreinheit 116 einen Akkumulator 140, beispielsweise Lithiumionen-Akkumulator, und das Schutzgasmagazin 120 einen Schutzgasbehälter 142.

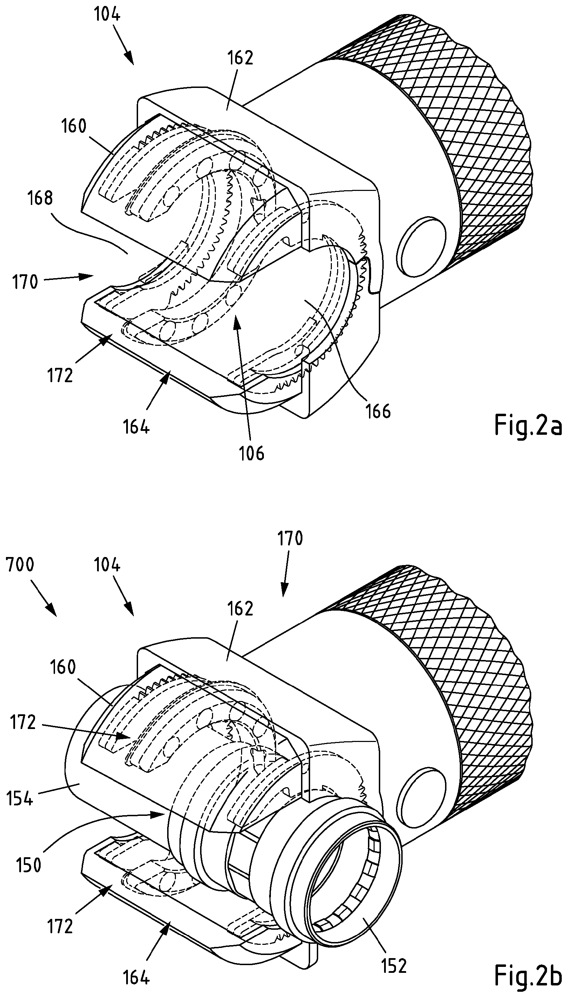

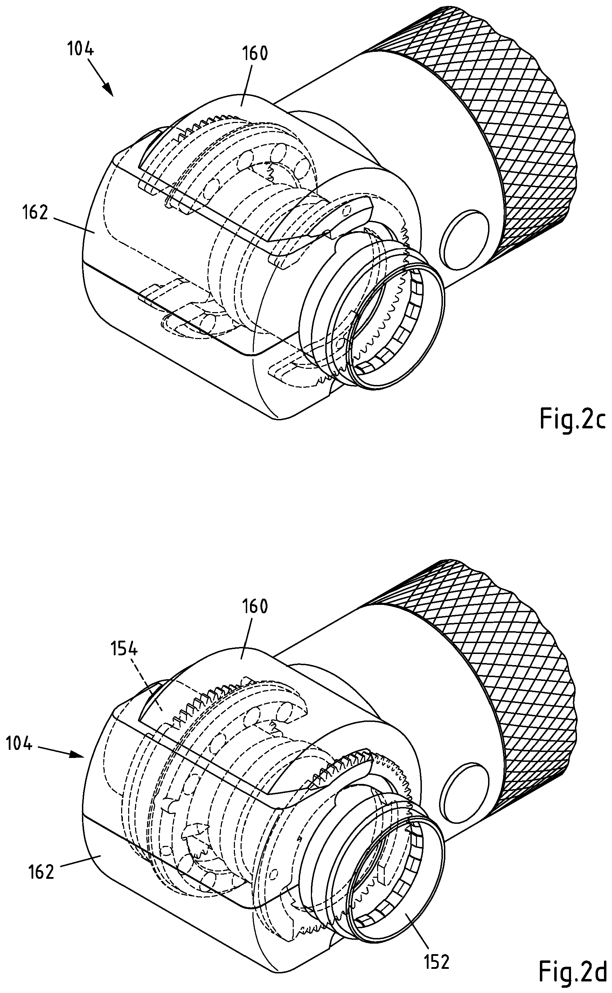

Die Fig. 2a-d zeigen den Schweißkopf 104 der Orbitalschweißvorrichtung 100 in schematischer, perspektivischer Darstellung, und zwar in geöffneter Stellung (Fig. 2a), in geöffneter Stellung nach Anordnen eines Fügebereich 150 zweier Fügepartner, nämlich eines Fittings 152 und eines Rohrendes 154, in der Aufnahme 106 (Fig. 2b), sowie in geschlossener Stellung vor (Fig. 2c) und während der Durchführung eines Orbitalschweißprozesses (Fig. 2d).

Der Schweißkopf 104 weist einen feststehenden Teil 160, der die Aufnahme 106 in Umfangsrichtung abschnittsweise umgibt, sowie einen beweglichen Teil 162 auf. In der geöffneten Stellung ist der bewegliche Teil 162 zumindest teilweise in den feststehenden Teil 160 zurückgezogen und gibt in Umfangsrichtung eine Einführöffnung 164 frei. In der geschlossenen Stellung verschließt der bewegliche Teil 162 die Einführöffnung 164, so dass die Aufnahme 106 in Umfangsrichtung im Wesentlichen vollständig geschlossen ist. In axialer Richtung (Längsrichtung) verläuft die Aufnahme 106 zwischen einer ersten Öffnung 166 und einer zweiten Öffnung 168.

Zum Verstellen des Schweißkopfs 104 zwischen der geöffneten und geschlossenen Stellung ist am Schweißkopf 104 eine Verstellmechanik 170 vorgesehen. Weiterhin ist am Schweißkopf 104 eine Elektrodenumlaufmechanik 172 vorgesehen, mit der die Schweißelektrode 126 in geschlossener Stellung des Schweißkopfs 104 für die Durchführung eines Orbitalschweißprozesses in Umfangsrichtung um die Aufnahme 106 bewegt werden kann.

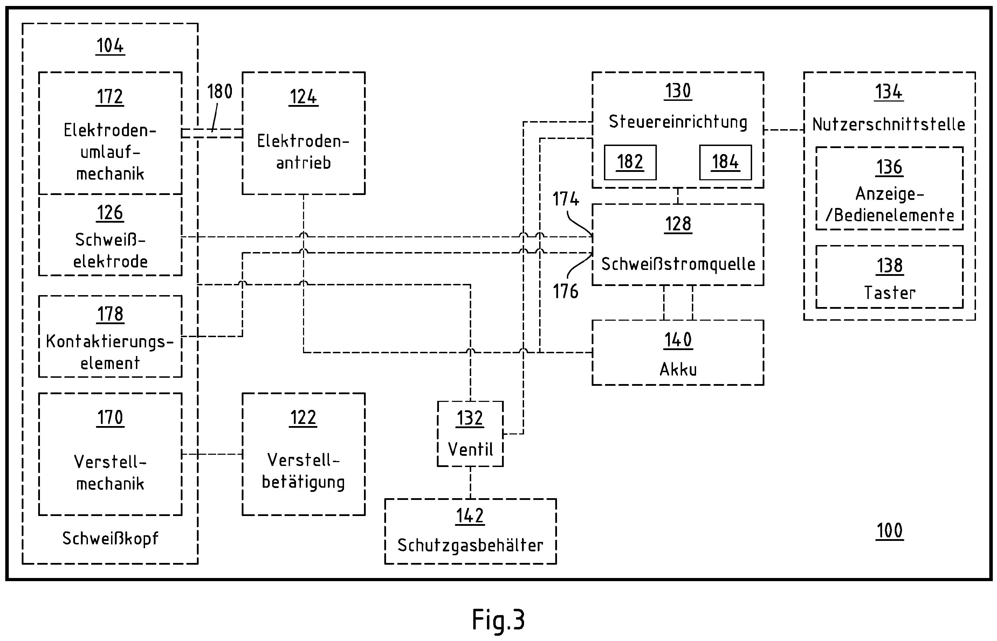

Fig. 3 zeigt eine schematische Blockdarstellung der funktionalen Komponenten der Orbitalschweißvorrichtung 100 aus Fig. 1. Der Akkumulator 140 versorgt sämtliche elektrischen Komponenten der Orbitalschweißvorrichtung 100 mit elektrischer Energie. Insbesondere versorgt der Akkumulator 140 die Schweißstromquelle 128, die Steuereinrichtung 130 und den Elektrodenantrieb 124.

Die Schweißstromquelle 128 stellt die Zündspannung für die Lichtbogenzündung und den Schweißstrom für den Orbitalschweißprozess zur Verfügung. Die Schweißstromquelle 128 weist zu diesem Zweck zwei Ausgänge 174, 176 auf, von denen während eines Orbitalschweißprozesses einer in elektrisch leitfähiger Weise mit der Schweißelektrode 126 und der andere in elektrisch leitfähiger Weise mit ein oder mehreren Kontaktierungselementen 178 zur Kontaktierung eines in der Aufnahme 106 angeordneten Fügepartners verbunden ist.

Der Elektrodenantrieb 124 weist vorzugsweise einen Elektromotor auf und ist, zum Beispiel über eine Achse 180, mit der Elektrodenumlaufmechanik 172 verbunden, um die Bewegung, beispielsweise eine Drehbewegung, vom Elektromotor auf die Elektrodenumlaufmechanik 172 zu übertragen, so dass die Elektrodenumlaufmechanik 172 die Schweißelektrode um die Aufnahme 106 verfährt.

Die Steuereinrichtung 130 ist zur Steuerung der Orbitalschweißvorrichtung 100 eingerichtet und kann zu diesem Zweck insbesondere mindestens einen Mikroprozessor 182 und einen Speicher 184 mit Befehlen aufweisen, deren Ausführung auf dem mindestens einen Mikroprozessor 182 die Steuerung der Orbitalschweißvorrichtung 100 bewirkt.

Weiterhin ist die Steuereinrichtung 130 mit der Nutzerschnittstelle 134 verbunden, um Nutzerausgaben auszugeben, beispielsweise über einen von den Anzeige- und Bedienelementen 136 umfassten Bildschirm, und um Nutzereingaben zu empfangen, beispielsweise über von den Anzeige- und Bedienelementen 136 umfassten Tasten oder Touchscreen oder vom Brennertaster 138.

Die Steuereinrichtung 130 ist insbesondere zur Steuerung eines Orbitalschweißprozesses eingerichtet. Zu diesem Zweck ist die Steuereinrichtung 130 zu deren Steuerung insbesondere mit dem Elektrodenantrieb 124, mit dem Ventil 132 zur Steuerung des Schutzgasflusses zum Schweißkopf 104 und mit der Schweißstromquelle 128 verbunden.

Die Verstellbetätigung 122 ist im vorliegenden Ausführungsbeispiel mechanisch ausgebildet, so dass ein Nutzer durch manuelle Betätigung der Verstellbetätigung 122 die Verstellmechanik 170 antreiben kann, um den Schweißkopf 104 zwischen der geschlossenen oder geöffneten Stellung zu verstellen. Zusätzlich oder alternativ ist aber auch denkbar, dass die Verstellbetätigung 122 motorisiert ist, beispielsweise einen über die Steuereinrichtung 130 ansteuerbaren Elektromotor aufweist, so dass der Schweißkopf 104 automatisch zwischen der geschlossenen und geöffneten Stellung verstellbar ist.

Der Schutzgasbehälter 142, der ein Schutzgas enthält, insbesondere ein inertes Gas, und vorzugsweise austauschbar ist, ist über das Ventil 132 an den Schweißkopf 104 angeschlossen, wobei der Schweißkopf 104 vorzugsweise eine Schutzgasführung aufweist, um das Schutzgas für den Orbitalschweißprozess in den Bereich der Schweißelektrode 126 zu bringen.

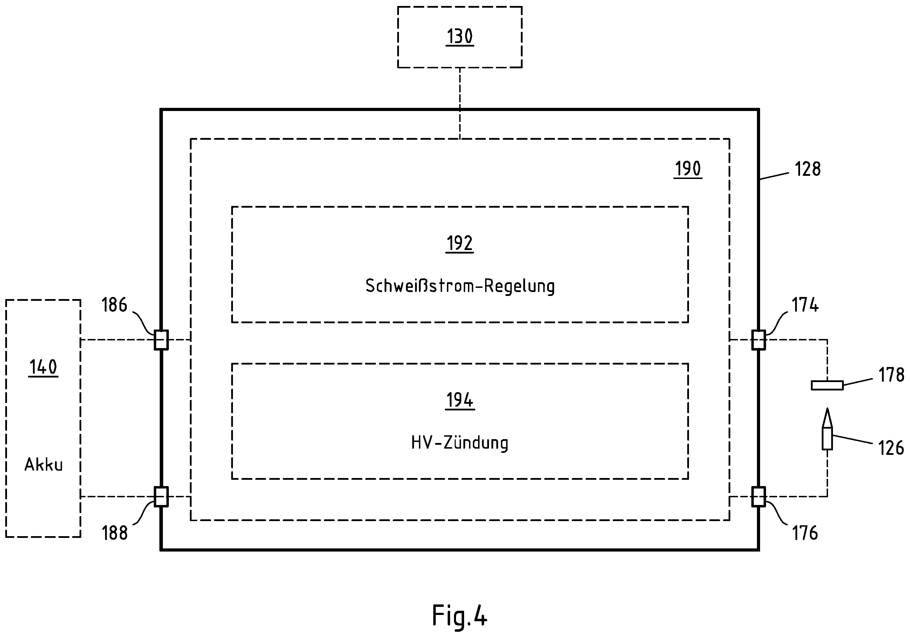

Fig. 4 zeigt eine schematische Blockdarstellung der funktionalen Komponenten und Anschlüsse der Schweißstromquelle 128. Die Schweißstromquelle 128 weist zwei Eingänge 186, 188 zum Anschluss der beiden Pole des Akkumulators 140 und die zwei Ausgänge 174, 176 zur Bereitstellung der Zündspannung und des Schweißstroms und zur elektrisch leitfähigen Verbindung mit dem Kontaktierungselement 178 und der Schweißelektrode 126 auf.

Die Schweißstromquelle 128 weist eine elektronische Schaltung 190 auf, die durch die an den Eingängen 186, 188 anliegende Spannung, insbesondere Gleichspannung, versorgt wird und über die Ausgänge 174, 176 eine Zündspannung zum Zünden eines Lichtbogens sowie einen Schweißstrom zum Speisen eines Lichtbogenschweißprozesses bereitstellen kann. Die elektronische Schaltung 190 kann zum Beispiel ein oder mehrere elektronische Schalter, insbesondere eine Halbbrückenschaltung, und vorzugsweise mindestens eine Spule umfassen.

Die elektronische Schaltung 190 kann weiter eine eigene Steuereinrichtung, beispielsweise einen Mikroprozessor, umfassen, die den Betrieb der Schweißstromquelle 128 steuert, insbesondere durch Ansteuerung von ein oder mehreren Schaltern der elektronischen Schaltung 190.

Die elektronische Schaltung 190 ist funktional dazu eingerichtet, an den Ausgängen 174, 176 einen Hochspannungspuls zur Zündung des Schweißlichtbogens bereitzustellen. Dies ist in Fig. 4 durch das funktionale Modul HV-Zündung 194 illustriert. Weiterhin ist die elektronische Schaltung 190 dazu eingerichtet, eine Schweißstromregelung zu bewirken, mit der die Stromstärke eines über die Ausgänge 174, 176 fließenden Schweißstroms, d.h. die Schweißstromstärke, geregelt werden kann, insbesondere entsprechend einer vorgegebenen Stromkennlinie. Dies ist in Fig. 4 durch das funktionale Modul Schweißstrom-Regelung 192 illustriert.

Entsprechend kann die Steuereinrichtung der Schweißstromquelle 128 insbesondere dazu eingerichtet sein, die Erzeugung eines Hochspannungspulses zum Zünden eines Schweißlichtbogens und anschließend die Bereitstellung eines Schweißstroms für einen Orbitalschweißprozess zu bewirken, insbesondere eine Schweißstromregelung zu bewirken. Die Steuereinrichtung der Schweißstromquelle 128 ist vorzugsweise dazu eingerichtet, bei brennendem Lichtbogen den Schweißstrom gemäß einer vorgegebenen oder vorgebbaren Schweißstromkennlinie zu regeln.

Die Schweißstromquelle 128 ist mit der Steuereinrichtung 130 verbindbar oder verbunden und kann auf diese Weise durch die Steuereinrichtung 130 gesteuert werden. Insbesondere kann die Steuereinrichtung 130 die Steuereinrichtung der Schweißstromquelle 128 ansteuern, um die Steuerung des Betriebs der Schweißstromquelle 128 durch die Steuereinrichtung der Schweißstromquelle 128 zu veranlassen und/oder zu konfigurieren.

Anstelle von zwei separaten Steuereinrichtungen ist auch denkbar, dass die Steuereinrichtung 130 und die Steuereinrichtung der Schweißstromquelle 128 als eine gemeinsame Steuereinrichtung, beispielsweise als ein Mikroprozessor, ausgebildet ist.

Im Folgenden wird nun die Durchführung eines Orbitalschweißprozesses mit der Orbitalschweißvorrichtung 100 erläutert, und zwar die Durchführung eines Orbitalschweißprozesses an einem Rohrende 154 und einem Fitting 152.

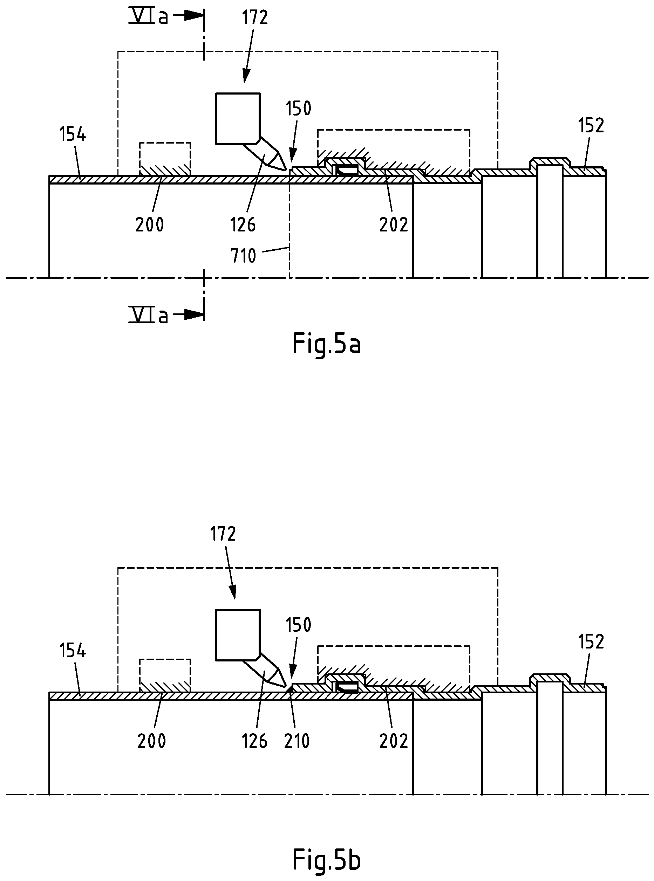

Die Fig. 5a-b zeigen jeweils eine schematische Querschnittsdarstellung des im Schweißkopf 104 angeordneten Fügebereichs 150 von Fitting 152 und Rohrende 154, wobei die Figuren lediglich eine obere Hälfte zeigen. Die dargestellten Komponenten des Schweißkopfs 104 sind teilweise gestrichelt dargestellt.

Der Fitting 152 wird - wie in Fig. 5a dargestellt - auf das Rohrende 154 aufgeschoben. Der Innenquerschnitt des Fittings 152 ist zu diesem Zweck vorzugsweise derart an den Außenquerschnitt des Rohrendes 154 angepasst, dass zwischen der Außenwand des Rohrendes 154 und der Innenwand des Fittings 152 nur ein geringes Spaltmaß verbleibt.

Der auf diese Weise gebildete Überlappstoß von Rohrende 154 und Fitting 152 bildet den Fügebereich 150, in dem Fitting 152 und Rohrende 154 miteinander verschweißt werden sollen.

Um den Orbitalschweißprozess durchzuführen, wird der Schweißkopf 104 über die Verstellbetätigung 122 zunächst in die geöffnete Stellung verstellt, so dass der bewegliche Teil 162 des Schweißkopfs 104 die Einführöffnung 164 freigibt (Fig. 2a). Das Handgerät 102 mit dem Schweißkopf 104 kann dann seitlich mit der Einführöffnung 164 auf den Fügebereich 150 von Rohrende 154 und darauf aufgeschobenem Fitting 152 aufgesetzt werden, so dass der Fügebereich 150 in der Aufnahme 106 angeordnet ist (Fig. 2b), während sich der übrige Teil des Fittings 152 und der übrige Teil des Rohrendes 154 durch die Öffnungen 166, 168 aus der Aufnahme 106 heraus erstrecken.

Anschließend wird der Schweißkopf 104 über die Verstellbetätigung 122 in die geschlossene Stellung verstellt (Fig. 2c). In der geschlossenen Stellung wird der Fügebereich 150 von Rohrende 154 und Fitting 152 vorzugsweise form- und/oder kraftschlüssig durch den feststehenden Teil 160 und den beweglichen Teil 162 des Schweißkopfes 104 in der Aufnahme 106 fixiert, und zwar insbesondere in axialer Richtung und weiter bevorzugt auch in azimutaler Richtung. Weiterhin bewirkt diese Fixierung vorzugsweise auch eine Ausrichtung von Rohrende 154 und Fitting 152, besonders bevorzugt eine Zentrierung des Rohrendes 154 im Fitting 152.

In Fig. 5a sind die den Fitting 152 und das Rohrende 154 fixierenden Konturen 200, 202 schematisch mit gestrichelten Linien dargestellt. Die Fixierung erfolgt insbesondere derart, dass der Fügebereich 150 im Bereich der Schweißelektrode 126 angeordnet ist. Die Schweißelektrode 126 ist vorliegend schräg nach innen gerichtet, insbesondere mit einem Winkel zur radialen Richtung im Bereich 5-45°, beispielsweise 45°, und kann schräg in Umfangsrichtung, d.h. in Schweißrichtung, gerichtet sein, zum Beispiel mit einem Winkel im Bereich 0-15° zur radialen Richtung. Die Schweißelektrode 126 weist in der Anordnung in Fig. 5a mit ihrer Spitze auf den Überlappstoß. Die Konturen 200, 202 können insbesondere zumindest teilweise zu den ein oder mehreren Kontaktierungselementen 178 gehören, um Fitting 152 und Rohrende 154 elektrisch leitend mit einem Ausgang der Schweißstromquelle 128 zu verbinden.

Die Konturen 200 sind insbesondere an die Außenkontur des Fittings angepasst. Die Fitting 152 und Rohrende 154 fixierenden Konturen 200, 202 können insbesondere ausgebildet sein, den Fitting 152 und das Rohrende 154 zu verspannen, insbesondere kraftschlüssig zu halten. Durch eine solche Fixierung von Fitting 152 und/oder Rohrende 154 kann eine zuverlässige elektrische Kontaktierung des Fittings 152 bzw. des Rohrendes 154 erreicht werden.

Die Orbitalschweißvorrichtung 100 mit dem Schweißkopf 104 und der Fitting 152 bilden ein System 700.

In der geschlossenen Stellung des Schweißkopfes 104 wird der Fügebereich 150 vorzugsweise in Umfangsrichtung vollständig eingeschlossen, so dass das während des Orbitalschweißprozesses zugeführte Schutzgas im Fügebereich 150 gehalten wird und die Umgebung, insbesondere der Nutzer, vor während des Orbitalschweißprozesses entstehendem Schweißrauch und UV-Licht geschützt wird.

Nach dem Verstellen des Schweißkopfs 104 in die geschlossene Stellung kann der Nutzer, zum Beispiel über Betätigung des Brennertasters 138, den Start des Orbitalschweißprozesses auslösen. Die Steuereinrichtung 130 steuert dazu den Elektrodenantrieb 124 und die Schweißstromquelle 128 derart an, dass die Schweißelektrode 126 in Umfangsrichtung eine Kette 211 von Fügepunkten 210 erzeugt, die den Fitting 152 und das Rohrende 154 stoffschlüssig verbinden.

Die Fig. 5a-b zeigen schematisch die Erzeugung eines Fügepunkts 210. Zur Erzeugung eines ersten Fügepunkts 210 wird von der Schweißstromquelle 128 zunächst ein Hochspannungspuls erzeugt, der eine kontaktlose Zündung eines Lichtbogens zwischen der Schweißelektrode 126 und dem Fitting 152 bzw. Rohrende 154 bewirkt. Anschließend regelt die Schweißstromquelle 128 den Schweißstrom entsprechend einer Schweißstromkennlinie, die insbesondere eine Folge von Hochstromphasen und Niedrigstromphasen umfasst. Während der Hochstromphasen führt der durch den Lichtbogen bewirkte Wärmeeintrag zur Bildung eines Schmelzbads (auch als Schweißbad bezeichnet) am Überlappstoß von Fitting 152 und Rohrende 154, das in der Niedrigstromphase zumindest teilweise erstarrt und einen Fügepunkt 210 bildet. Damit der nächste Fügepunkt in Umfangsrichtung versetzt zum vorhergehenden Fügepunkt erzeugt wird, steuert die Steuereinrichtung 130 den Elektrodenantrieb 124 an, so dass dieser die Schweißelektrode 126 in Umfangsrichtung weiterbewegt, und die Schweißstromquelle 128 bewirkt in der nächsten Hochstromphase das Aufschmelzen eines neuen Schmelzbads für den benachbarten Fügepunkt, das mit dem ersten Fügepunkt vorzugsweise überlappt. Eine neue Zündung ist für den zweiten und die weiteren Fügepunkte nicht erforderlich, da der Lichtbogen vorzugsweise bis zum letzten Fügepunkt durchgehend brennt.

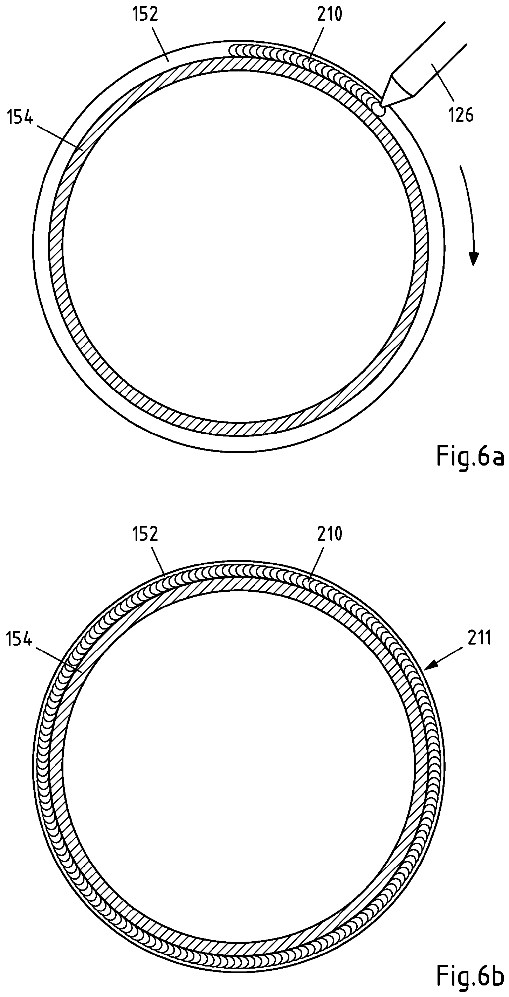

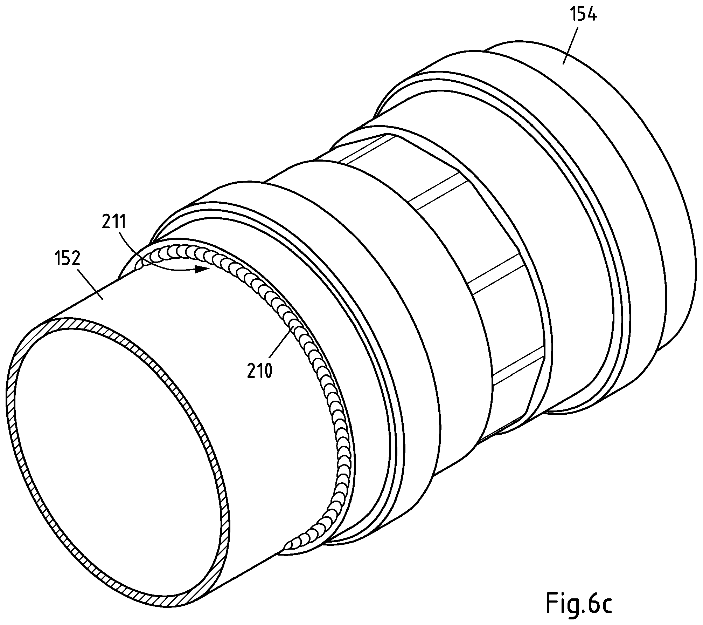

Auf diese Weise wird nach und nach die Kette 211 von Fügepunkten 210 erzeugt, durch die Fitting 152 und Rohrende 154 am Überlappstoß vorzugsweise fluiddicht miteinander verbunden werden. Die Fig. 6a-b zeigen die Erzeugung der Fügepunkte 210 in schematischen Schnittdarstellungen entsprechend der in Fig. 5a mit "VIa" bezeichneten Schnittebene, wobei Fig. 6a einen Zeitpunkt während des laufenden Orbitalschweißprozesses und Fig. 6b einen Zeitpunkt nach Abschluss des Orbitalschweißprozesses zeigt. Fig. 6c zeigt in perspektivischer Darstellung die fertige Fügenaht (Schweißnaht) von Fitting 152 und Rohrende 154.

Nach Herstellung der fertigen Fügenaht senkt die Schweißstromquelle 128 den Schweißstrom auf Null ab, so dass der Lichtbogen erlischt. Durch Betätigung der Verstellbetätigung 122 kann der Schweißkopf 104 dann vom Nutzer wieder in die geöffnete Stellung verstellt und der Schweißkopf 104 seitlich von nunmehr stoffschlüssig verbundenem Fitting 152 und Rohrende 154 abgenommen werden.

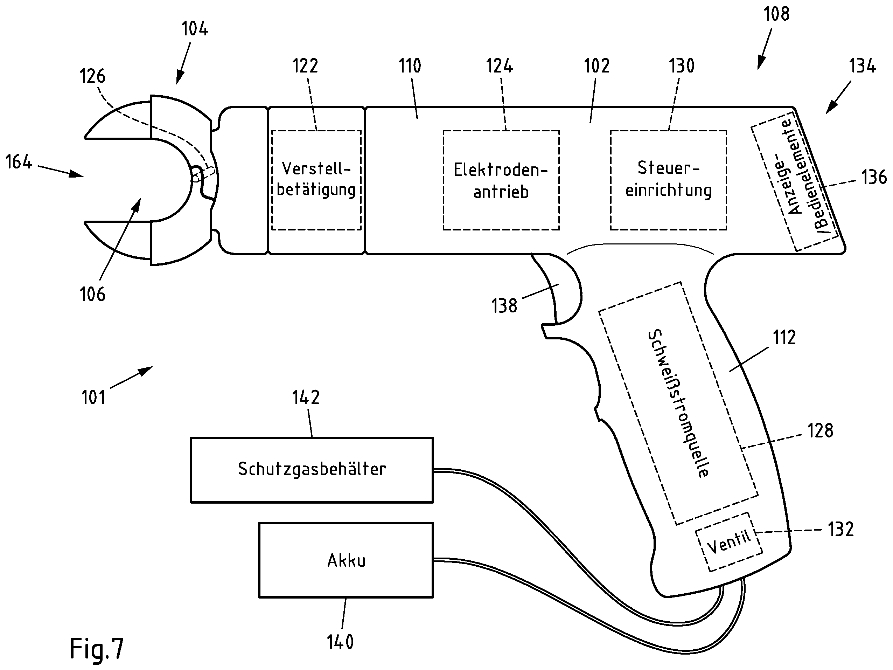

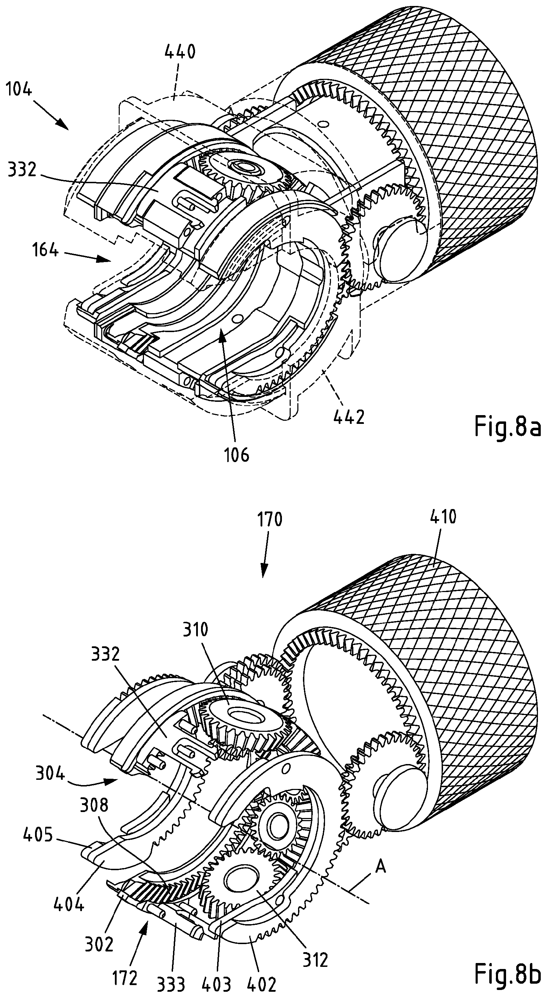

Fig. 7 zeigt ein weiteres Ausführungsbeispiel der Orbitalschweißvorrichtung. Die Orbitalschweißvorrichtung 101 weist einen ähnlichen Aufbau und eine ähnliche Funktionsweise auf wie die Orbitalschweißvorrichtung 100. Einander funktional entsprechende Komponenten sind daher, auch wenn sie teilweise anders angeordnet oder ausgestaltet sein mögen, mit denselben Bezugszeichen versehen und es wird insoweit auf obige Beschreibung der Fig. 1 - 6c und die nachfolgende Beschreibung der Fig. 8a-i verwiesen.

Die Orbitalschweißvorrichtung 101 unterscheidet sich dadurch von der Orbitalschweißvorrichtung 100, dass einige Komponenten, in Fig. 7 der Schutzgasbehälter 142 und der Akkumulator 140, separat vom Handgerät ausgebildet und durch entsprechende Gas- bzw. Stromleitungen mit diesem verbunden sind. Auf diese Weise kann das Handgerät kompakter und leichter ausgebildet werden. Weiterhin können auf diese Weise größere Schutzgasbehälter 142 und Akkumulatoren 140 verwendet werden. Der Schutzgasbehälter 142 und der Akkumulator 140 können beispielsweise in einem gesonderten Koffer oder Rucksack angeordnet werden.

Anstelle eines Akkumulators kann auch ein Netzanschluss zur Stromversorgung des Handgeräts 102 der Schweißstromquelle 128 vorgesehen sein. Dies ermöglicht einen längeren Betrieb, wenn auch bei eingeschränkterer Flexibilität in der Handhabung.

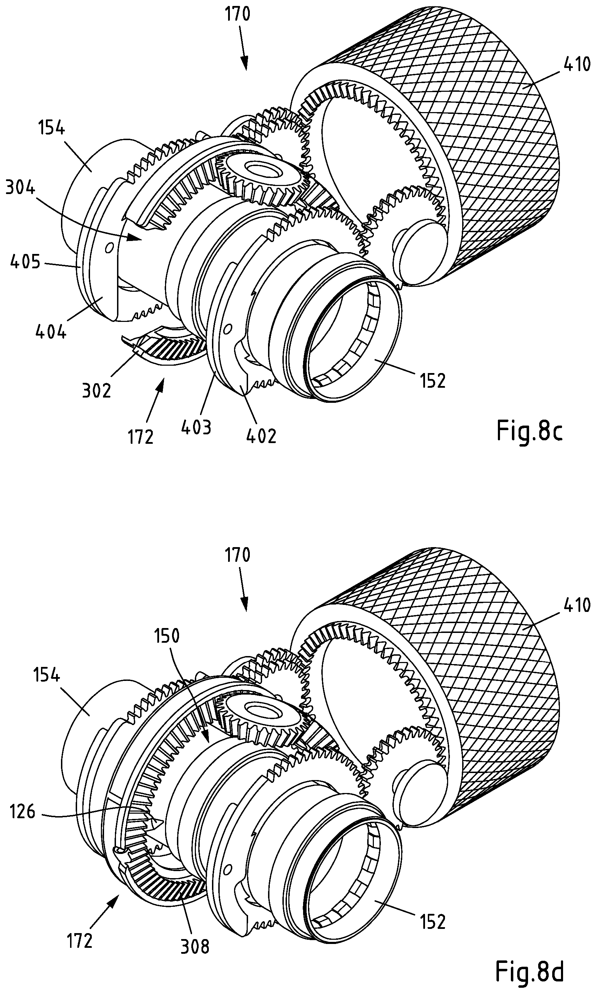

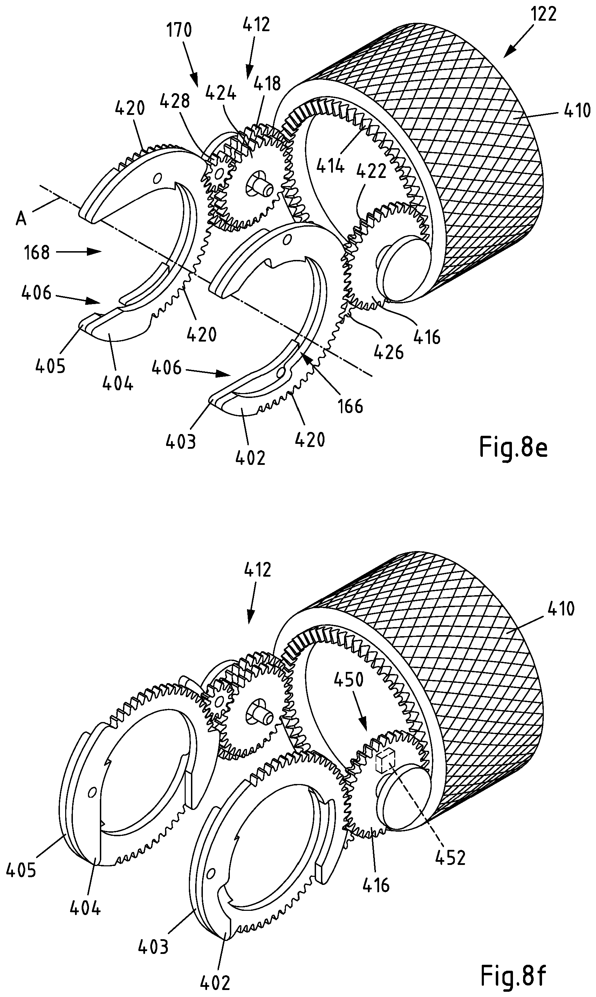

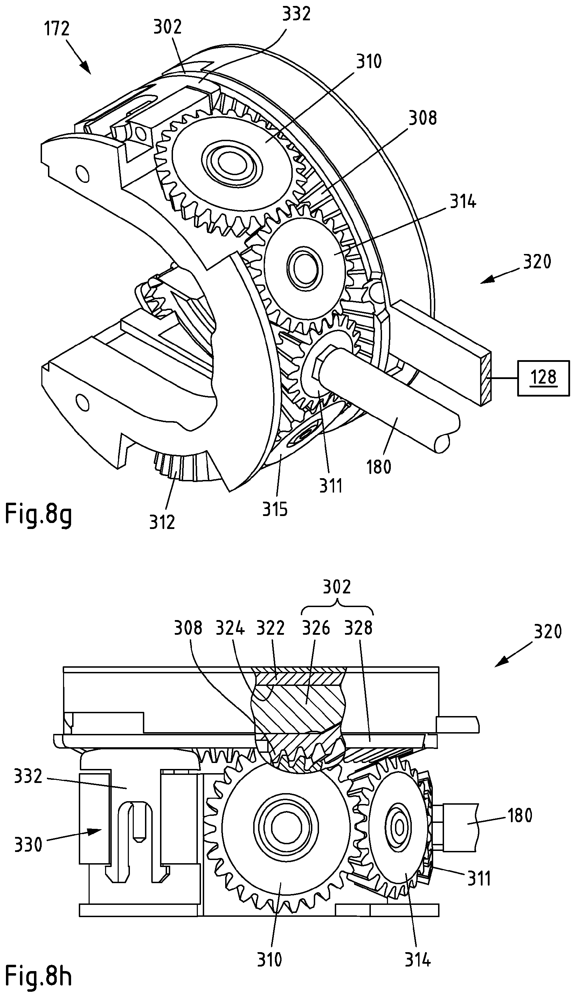

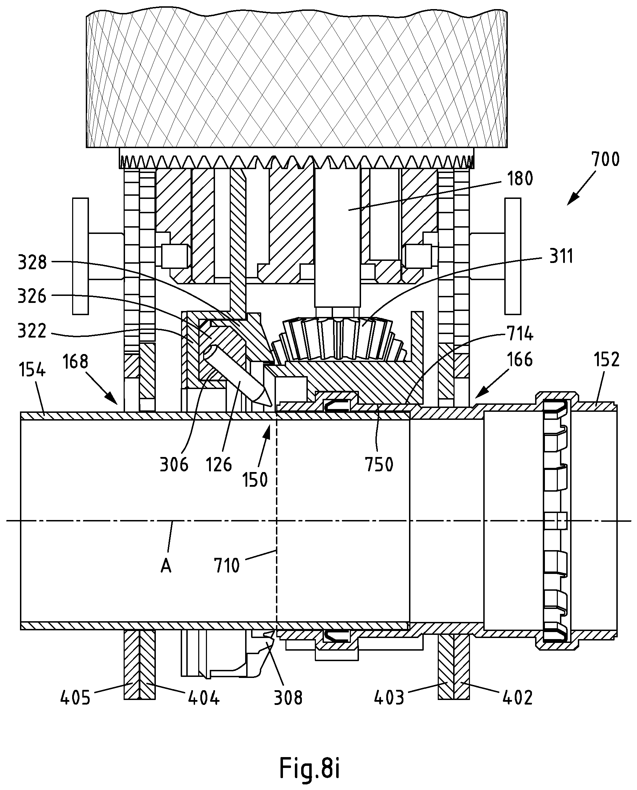

Die Figuren 8a-i zeigen detailliertere Ansichten des Schweißkopfes 104 der Orbitalschweißvorrichtung 100 aus Fig. 1 bzw. der Orbitalschweißvorrichtung 101 aus Fig. 7. Fig. 8a zeigt den Schweißkopf 104 in perspektivischer Darstellung, wobei die äußeren Komponenten teilweise durchsichtig mit gestrichelten Linien dargestellt sind. Die Fig. 8b-d zeigen in perspektivischer Ansicht die Elektrodenumlaufmechanik 172 und die Verstellmechanik 170, und zwar in geöffneter (Fig. 8b) und geschlossener Stellung des Schweißkopfs (Fig. 8c-d) sowie in Ausgangsstellung (Fig. 8b-c) und verdrehter Stellung der Elektrodenumlaufmechanik 172 (Fig. 8d). In Fig. 8c-d ist zudem der Fügebereich 150 von Fitting 152 und Rohrende 154 in die Aufnahme 106 eingesetzt. Die Fig. 8e-f zeigen in perspektivischer Ansicht die Verstellmechanik 170 in geöffneter (Fig. 8e) und geschlossener Stellung des Schweißkopfs 104 (Fig. 8f). Die Fig. 8g-h zeigen in perspektivischer Ansicht (Fig. 8g) sowie in Ansicht von oben (Fig. 8h) die Elektrodenumlaufmechanik 172 sowie die Kontaktierungsmittel 320. Fig. 8i zeigt den Schweißkopf 104 mit in der Aufnahme 106 angeordnetem Fügebereich 150 von Fitting 152 und Rohrende 154 in Schnittdarstellung.

Der Schweißkopf 104 weist die Aufnahme 106 zur Positionierung eines Fügebereichs 150 zweier zumindest im Fügebereich 150 rohrförmiger Fügepartner, nämlich eines Fittings 152 und eines Rohrendes 154, auf.

Die Elektrodenumlaufmechanik 172 des Schweißkopfs 104 umfasst ein C-förmiges Elektroden-Ringsegment 302, das in Umfangsrichtung um die Aufnahme 106 angeordnet und im Schweißkopf 104 derart gelagert ist, dass es um eine gedachte Längsachse A der Aufnahme 106 endlos, d.h. über beliebige Winkel, drehbar ist. Das Elektroden-Ringsegment 302 weist in Umfangsrichtung eine Ringsegment-Öffnung 304 auf, deren Größe an die Einführöffnung 164 angepasst ist und die in der geöffneten Stellung (s. Fig. 8a-b) derart angeordnet ist, dass sie einen Teil der Einführöffnung 164 bildet.

Das Elektroden-Ringsegment 302 weist eine Elektroden-Halterung 306 für die Schweißelektrode 126 auf, die in die Elektroden-Halterung 306 einsetzbar bzw. eingesetzt ist. Bei Verschleiß der Schweißelektrode 126 kann diese aus der Elektroden-Halterung 306 entnommen und eine neue Schweißelektrode eingesetzt werden.

Das Elektroden-Ringsegment 302 ist als Kegelzahnradsegment ausgebildet und weist entsprechend an einer Seite eine Kegelradverzahnung 308 auf. Die Elektrodenumlaufmechanik 172 umfasst weiter mehrere, vorliegend zwei, in Umfangsrichtung um die Aufnahme angeordnete Antriebsräder 310, 312 in Form von Antriebskegelzahnrädern, die mit der Kegelradverzahnung 308 des Elektroden-Ringsegments 302 in Eingriff stehen. Die Antriebskegelzahnräder 310, 312 sind so angeordnet, dass bei jeder Drehstellung des Elektroden-Ringsegments 302 mindestens eins der Antriebskegelzahnräder 310, 312 mit der Kegelradverzahnung 308 des Elektroden-Ringsegments 302 in Eingriff ist. Die Antriebskegelzahnräder 310, 312 sind über eine Achse 180 mit einem Kopplungskegelrad 311 sowie weiteren zwischen Kopplungskegelrad 311 und den Antriebskegelzahnrädern 310, 312 angeordneten Kopplungskegelrädern 314, 315 mit dem Elektrodenantrieb 124 gekoppelt. Die Drehachsen der Antriebskegelzahnräder 310, 312 und Kopplungskegelräder 311, 314, 315 liegen in einer quer zur Längsachse A liegenden Ebene. Auf diese Weise wird eine synchrone und gleichmäßige Bewegung der Antriebskegelzahnräder 310, 312 sichergestellt.

Weiterhin sind Kontaktierungsmittel 320 zur elektrischen Kontaktierung des Elektroden-Ringsegments 302 und der Schweißelektrode 126 und zur elektrischen Verbindung mit der Schweißstromquelle 128 vorgesehen.

Die Kontaktierungsmittel 320 umfassen ein Kontaktierungs-Ringsegment 322, das in axialer Richtung versetzt neben dem Elektroden-Ringsegment 302 angeordnet und elektrisch leitend mit der Schweißstromquelle 128 verbunden oder verbindbar ist. Das Kontaktierungs-Ringsegment 322 ist auf der dem Elektroden-Ringsegment 302 zugewandten Seite 324 vorzugsweise vollständig leitfähig oder weist auf der Seite 324 ein oder mehrere leitfähige Abschnitte auf.

Das Elektroden-Ringsegment 302 ist auf der dem Kontaktierungs-Ringsegment 322 zugewandten Seite ebenfalls elektrisch leitfähig ausgebildet. Im vorliegenden Ausführungsbeispiel ist das Elektroden-Ringsegment 302 mehrteilig ausgebildet und weist auf der dem Kontaktierungs-Ringsegment 322 zugewandten Seite ein Leitungs-Ringsegment 326 aus leitfähigem Material, beispielsweise Kupfer, auf sowie auf der den Antriebskegelzahnräder 310, 312 zugewandten Seite ein Antriebs-Ringsegment 328, das die Kegelradverzahnung 308 trägt. Das Antriebs-Ringsegment 328 ist vorzugsweise aus isolierendem Material, beispielsweise Kunststoff. Die Elektroden-Halterung 306 ist durch das Leitungs-Ringsegment 326 gebildet oder elektrisch leitfähig damit verbunden.

Um bei Drehung des Elektroden-Ringsegments 302 eine großflächige Kontaktierung zwischen dem Leitungs-Ringsegment 326 und dem Kontaktierungs-Ringsegment 322 zur möglichst verlust- und unterbrechungsfreien Übertragung des Schweißstroms sicherzustellen, sind im Schweißkopf 104 Andrückmittel 330 in Form mehrerer federgelagerter Andrückelemente 332, 333 vorgesehen, die das Elektroden-Ringsegment 302 gegen das Leitungs-Ringsegment 326 und damit diese beiden Komponenten gegeneinanderdrücken. Die Andrückelemente 332, 333 sind in Umfangsrichtung verteilt angeordnet, so dass bei jeder Drehstellung des Elektroden-Ringsegments 302 mindestens eines der Andrückelemente 332, 333 mit dem Elektroden-Ringsegment 302 in Kontakt steht.

Der Schweißkopf 104 weist weiter mehrere C-förmige Verschluss-Ringsegmente 402, 403, 404, 405 auf, von denen jedes in Umfangsrichtung um die Aufnahme 106 angeordnet und derart im Schweißkopf 104 gelagert ist, dass es um die Längsachse A der Aufnahme drehbar ist.

Die Verschluss-Ringsegmente 402, 403, 404, 405 sind jeweils paarweise nebeneinander angeordnet, und zwar zwei Verschluss-Ringsegmente 402, 403 im Bereich der ersten Öffnung 166 und zwei Verschluss-Ringsegmente 404, 405 im Bereich der zweiten Öffnung 168.

Die Verschluss-Ringsegmente 402, 403, 404, 405 weisen in Umfangsrichtung jeweils eine Ringsegment-Öffnung 406 auf, deren Größe an die Einführöffnung 164 angepasst ist.

Die Verschluss-Ringsegmente 402 - 405 können jeweils zwischen einer geöffneten Drehposition (s. Fig. 8e) und einer geschlossenen Drehposition (s. Fig. 8f) verstellt werden, wobei die Drehrichtung von der geöffneten Drehposition in die geschlossene Drehposition der unmittelbar nebeneinander angeordneten Verschluss-Ringsegmente 402 und 403 bzw. 404 und 405 jeweils gegenläufig ist.

Um die Verschluss-Ringsegmente 402 - 405 von der geöffneten Drehposition in die geschlossene Drehposition zu verstellen, weist die Orbitalschweißvorrichtung 100 ein Betätigungselement 410 in Form einer Griffhülse auf. Das Betätigungselement 410 ist über ein Getriebe 412 mit den Verschluss-Ringsegmenten 402 - 405 gekoppelt, so dass durch eine Drehbewegung des Betätigungselements 410 die Verschluss-Ringsegmenten 402 - 405 synchron von der geöffneten Drehposition in die geschlossene Drehposition bzw. von der geschlossenen Drehposition in die geöffnete Drehposition verstellt werden können.

Das Getriebe 412 umfasst ein am Betätigungselement 410 vorgesehenes Kronenrad 414, das auf der Seite der Verschluss-Ringsegmente 402, 403 sowie auf der Seite der Verschluss-Ringsegmente 404, 405 jeweils mit einem Zahnrad 416, 418 kämmt, dessen jeweilige Drehachse quer zur Drehachse des Betätigungselements 410 liegt. Das Zahnrad 416 ist wiederum mit den Verschluss-Ringsegmenten 402, 403 und das Zahnrad 418 mit den Verschluss-Ringsegmenten 404, 405 gekoppelt. Zu diesem Zweck weisen die Verschluss-Ringsegmente 402 - 405 jeweilige Außenverzahnungen 420 auf, wobei die Zahnräder 416, 418 direkt mit der Außenverzahnung 420 des jeweils außen liegenden Verschluss-Ringsegments 402, 405 gekoppelt sind und mit der Außenverzahnung 420 der jeweiligen innen liegenden Verschluss-Ringsegmente 403, 404 über ein koaxial drehfest mit dem jeweiligen Zahnrad 416, 418 verbundenes kleineres Zahnrad 422 bzw. 424 sowie ein dazwischen angeordnetes Zwischenzahnrad 426 bzw. 428 zur Änderung der Drehrichtung gekoppelt sind. Die Übersetzung vom Zahnrad 416 zur Außenverzahnung 420 des Verschluss-Ringsegments 402 ist gleich der Übersetzung vom Zahnrad 424 zur Außenverzahnung 420 des Verschluss-Ringsegments 404. Weiterhin ist die Übersetzung vom Zahnrad 422 zur Außenverzahnung 420 des Verschluss-Ringsegments 403 gleich der der Übersetzung vom Zahnrad 418 zur Außenverzahnung 420 des Verschluss-Ringsegments 405. Weiterhin ist die Übersetzung vom Zahnrad 416 zur Außenverzahnung 420 des Verschluss-Ringsegments 402 gleich der Übersetzung vom Zahnrad 422 zur Außenverzahnung 420 des Verschluss-Ringsegments 403.

Auf diese Weise kann die Drehbewegung des Betätigungselements 410 synchron auf alle vier Verschluss-Ringsegmente 402 - 405 mit unterschiedlichen Drehrichtungen übertragen werden. Die Verwendung des Kronenrads 414 erlaubt insbesondere eine besonders kompakte Umlenkung der Drehbewegung. Weiter erlaubt die Verwendung der drehfest verbundenen Zahnräder 422, 424 mit dem Zwischenzahnrad 426, 428 eine besonders kompakte Drehrichtungsumkehr für die jeweils benachbarten Verschluss-Ringsegmente 402, 403 bzw. 404, 405.

In der geöffneten Stellung (s. Fig. 8a, b & e) sind die Verschluss-Ringsegmente 402 - 405 in der jeweiligen geöffneten Drehposition positioniert, in der die jeweilige Ringsegment-Öffnung 406 der Verschluss-Ringsegmente 402 - 405 jeweils derart positioniert ist, dass sie einen Teil der Einführöffnung 164 bildet.

In der geschlossenen Stellung (s. Fig. 8c, d, f & i) sind die Verschluss-Ringsegmente 402 - 405 in der jeweiligen geschlossenen Drehposition positioniert, in der die Verschluss-Ringsegmente 402 - 405 jeweils derart positioniert sind, dass sie die Einführöffnung 164 teilweise verschließen.

Um die Einführöffnung 164 in der geschlossenen Stellung möglichst vollständig zu verschließen, weist der Schweißkopf 104 eine obere Abdeckung 440 und eine untere Abdeckung 442 auf, die jeweils mit zwei jeweils gleichsinnig drehenden Verschluss-Ringsegmenten 402 und 405 (obere Verschluss-Ringsegmente) bzw. 403 und 404 (untere Verschluss-Ringsegmente) drehfest verbunden sind, so dass die Abdeckungen 440, 442 die Einführöffnung 164 in der geöffneten Stellung des Schweißkopfs 104 freigeben und in der geschlossenen Stellung des Schweißkopfs 104 verschließen.

Das Betätigungselement 410 stellt die Verstellbetätigung 122 der Orbitalschweißvorrichtung 100 dar; und die Verschluss-Ringsegmente 402 - 405 mit dem Getriebe 412 stellen die Verstellmechanik 170 der Orbitalschweißvorrichtung 100 dar.

Es kann eine Schweißkopf-Stellungs-Sensorik 450 vorgesehen sein, um zu detektieren, ob sich der Schweißkopf 104 in der geschlossenen Stellung befindet. Zu diesem Zweck kann beispielsweise ein Sensor 452 am Zahnrad 416 angeordnet sein, mit dem sich die Drehbewegung des Zahnrads 416 detektieren und dadurch die Stellung der Verschluss-Ringsegmente 402 - 405 bestimmen lässt. Beispielsweise können ein oder mehrere Magnete in das Zahnrad 416 integriert sein, deren Passieren in der ein oder anderen Richtung der Sensor 452 erfasst und dadurch die Drehbewegung des Zahnrads 416 detektiert.

Mit der Schweißkopf-Stellungs-Sensorik 450 kann insbesondere bestimmt werden, ob sich der Schweißkopf 104 in der geschlossenen Stellung befindet. Die Steuereinrichtung 130 kann beispielsweise dazu eingerichtet sein, einen Schweißprozess nur dann durchzuführen, wenn sich der Schweißkopf 104 in der geschlossenen Stellung befindet.

Fig. 8i zeigt den Schweißkopf 104 mit in der Aufnahme 106 angeordnetem Fügebereich 150 des Rohrendes 154 und aufgeschobenem Fitting 152 in Schnittansicht. Der Fitting 152 weist eine Außenkontur 714 und der Schweißkopf 104 eine dazu korrespondierende Fitting-Fixierungskontur 750 auf, um den Fitting 152 in bei geschlossener Stellung des Schweißkopfs 104 in einer vorgegebenen Fittingposition zu fixieren, so dass die Fittingöffnung 710 eine vorgegebene Position zur Schweißelektrode 126 einnimmt, insbesondere einen vorgegebenen Abstand zur Spitze der Schweißelektrode 126. Die Fitting-Fixierungskontur 750 entspricht der in Fig. 5a schematisch angedeuteten Kontur 202. Vorzugsweise hält die Schweißelektrode 126 den vorgegebenen Abstand bzw. Abstandsbereich zur Fittingöffnung 710 in jeder Drehposition der Schweißelektrode 126 ein, so dass das Orbitalschweißverfahren mit sehr geringem Abstand zwischen Schweißelektrode 126 und Fittingöffnung 710 durchgeführt werden kann.

Die Verschluss-Ringsegmente 402 - 405 sind vorzugsweise dazu ausgebildet, den Fitting 152 und das Rohrende 154 in der vorgegebenen Position zu verspannen. Zu diesem Zweck können die Verschluss-Ringsegmente 402 - 405 beispielsweise leicht federnd ausgebildet sein, beispielsweise indem die Verschluss-Ringsegmente 402 - 405 selbst aus einem federnden Material gebildet sind und/oder indem die Verschluss-Ringsegmente 402 - 405 federnd gelagert sind. Auf diese Weise wird auch eine zuverlässige elektrische Kontaktierung von Fitting 152 und Rohrende 154 durch die Verschluss-Ringsegmente 402 - 405 erreicht.

Die Orbitalschweißvorrichtung 100 mit dem Schweißkopf 104 und der Fitting 152 mit der an die Fitting-Fixierungskontur 750 angepassten Außenkontur 714 bilden ein System 700.

### Bezugszeichenliste:

- 100, 101: Orbitalschweißvorrichtung
- 102: Handgerät
- 104: Schweißkopf
- 106: Aufnahme
- 108: Griffteil
- 110: Schaft
- 112: Handgriff
- 114: Anschluss für eine Akkumulatoreinheit
- 115: Anschluss für eine Schutzgaseinheit
- 116: Akkumulatoreinheit
- 120: Schutzgasmagazin
- 122: Verstellbetätigung
- 124: Elektrodenantrieb
- 126: Schweißelektrode
- 128: Schweißstromquelle
- 130: Steuereinrichtung
- 132: Ventil
- 134: Nutzerschnittstelle
- 136: Anzeige- und Bedienelemente
- 138: Brennertaster
- 140: Akkumulator
- 142: Schutzgasbehälter
- 150: Fügebereich
- 152: Fitting
- 154: Rohrende
- 160: feststehender Teil
- 162: beweglicher Teil
- 164: Einführöffnung
- 166: erste Öffnung
- 168: zweite Öffnung
- 170: Verstellmechanik
- 172: Elektrodenumlaufmechanik
- 174, 176: Ausgänge der Schweißstromquelle
- 178: Kontaktierungselemente
- 180: Achse
- 182: Mikroprozessor
- 184: Speicher
- 186, 188: Eingänge
- 190: elektronische Schaltung
- 192: Schweißstrom-Regelung
- 194: HV-Zündung
- 200, 202: Konturen
- 210: Fügepunkt
- 302: Elektroden-Ringsegment
- 304: Ringsegment-Öffnung
- 306: Elektroden-Halterung
- 308: Kegelradverzahnung
- 310, 312: Antriebskegelzahnräder
- 311, 314, 315: Kopplungskegelräder
- 320: Kontaktierungsmittel
- 322: Kontaktierungs-Ringsegment
- 324: eine Seite des Elektroden-Ringsegments
- 326: Leitungs-Ringsegment
- 328: Antriebs-Ringsegment
- 330: Andrückmittel
- 332, 333: Andrückelemente
- 402, 403, 404, 405: Verschluss-Ringsegment
- 406: Ringsegment-Öffnung
- 410: Betätigungselement
- 412: Getriebe
- 414: Kronenrad
- 416, 418: Zahnrad
- 420: Außenverzahnungen
- 422, 424: Zahnräder
- 426, 428: Zwischenzahnräder
- 440: obere Abdeckung
- 442: untere Abdeckung
- 450: Schweißkopf-Stellungs-Sensorik
- 452: Sensor
- 700: System
- 710: Fittingöffnung
- 714: Fitting-Außenkontur
- 750: Fitting-Fixierungskontur

## Patentansprüche

1. Orbitalschweißvorrichtung (100, 101),
- mit einem Schweißkopf (104), der eine Aufnahme (106) zur Positionierung eines Fügebereichs (150) zweier zumindest im Fügebereich (150) rohrförmiger Fügepartner, insbesondere eines Fittings (152) und eines Rohrendes (154), aufweist,
**dadurch gekennzeichnet,**
- **dass** der Schweißkopf (104) eine erste Öffnung (166) und eine der ersten Öffnung (166) gegenüberliegende zweite Öffnung (168) aufweist, zwischen denen sich die Aufnahme (106) erstreckt, und
- **dass** der Schweißkopf (104) zwischen einer geöffneten Stellung und einer geschlossenen Stellung verstellbar ist, wobei der Schweißkopf (104) in der geöffneten Stellung eine die erste und zweite Öffnung (166, 168) verbindende Einführöffnung (164) zum Einführen eines Fügebereichs (150) zweier zumindest im Fügebereich (150) rohrförmiger Fügepartner in die Aufnahme (106) aufweist, und wobei die Einführöffnung (164) in der geschlossenen Stellung zumindest teilweise geschlossen ist.

2. Orbitalschweißvorrichtung nach Anspruch 1,
**dadurch gekennzeichnet,**
- **dass** der Schweißkopf (104) ein oder mehrere Verschluss-Ringsegmente (402, 403, 404, 405) aufweist, von denen jedes in Umfangsrichtung eine jeweilige Ringsegment-Öffnung (304) aufweist und in Umfangsrichtung um die Aufnahme (106) angeordnet und derart gelagert ist, dass das jeweilige Verschluss-Ringsegment (402, 403, 404, 405) um eine gedachte Längsachse (A) der Aufnahme (106) drehbar ist, und von denen jedes in der geöffneten Stellung in einer geöffneten Drehposition positioniert ist, in der die jeweilige Ringsegment-Öffnung (304) einen Teil der Einführöffnung (164) bildet, und in der geschlossenen Stellung in einer geschlossenen Drehposition positioniert ist, in der das jeweilige Verschluss-Ringsegment (402, 403, 404, 405) die Einführöffnung (164) zumindest teilweise verschließt.

3. Orbitalschweißvorrichtung nach Anspruch 1 oder 2,
**dadurch gekennzeichnet, dass** der Schweißkopf (104) mehrere Verschluss-Ringsegmente aufweist (402, 403, 404, 405) und die Drehrichtung von der geöffneten Drehposition in die geschlossene Drehposition von mindestens zwei der mehreren Verschluss-Ringsegmente (402, 403; 404, 405), insbesondere von zwei in Längsrichtung nebeneinander angeordneten Verschluss-Ringsegmenten (402, 403; 404, 405), gegenläufig ist.

4. Orbitalschweißvorrichtung nach einem der Ansprüche 1 bis 3,
**dadurch gekennzeichnet, dass** ein oder mehrere erste der ein oder mehreren Verschluss-Ringsegmente (402, 403) im Bereich der ersten Öffnung (166) und/oder ein oder mehrere zweite der ein oder mehreren Verschluss-Ringsegmente (404, 405) im Bereich der zweiten Öffnung (168) angeordnet sind.

5. Orbitalschweißvorrichtung nach einem der Ansprüche 1 bis 4,
**dadurch gekennzeichnet, dass** mit ein oder mehreren oberen der ein oder mehreren Verschluss-Ringsegmente (402, 404) eine obere Abdeckung (440) und/oder mit ein oder mehreren unteren der ein oder mehreren Verschluss-Ringsegmente (403, 405) eine untere Abdeckung (442) drehfest verbunden ist, wobei die obere und/oder untere Abdeckung (440, 442) in der geöffneten Stellung des Schweißkopfs (104) die Einführöffnung (164) freigeben und in der geschlossenen Stellung des Schweißkopfs (104) die Einführöffnung (164) zumindest teilweise verschließen.

6. Orbitalschweißvorrichtung nach einem der Ansprüche 1 bis 5,
**dadurch gekennzeichnet, dass** eines, mehrere oder jedes der Verschluss-Ringsegmente (402, 403, 404, 405) mit einem Getriebe (412), insbesondere Zahnradgetriebe, gekoppelt ist, über das das betreffende Verschluss-Ringsegment (402, 403, 404, 405) zwischen der geöffneten Drehposition und der geschlossenen Drehposition verstellbar ist.

7. Orbitalschweißvorrichtung nach einem der Ansprüche 1 bis 6,
**dadurch gekennzeichnet, dass** ein Betätigungselement (410) vorgesehen ist, mit dem die ein oder mehreren Verschluss-Ringsegmente (402, 403, 404, 405) zwischen der geöffneten Drehposition und der geschlossenen Drehposition verstellbar sind.

8. Orbitalschweißvorrichtung nach einem der Ansprüche 1 bis 7,
**dadurch gekennzeichnet, dass** die Orbitalschweißvorrichtung (100, 101) ein Handgerät (102) umfasst, das den Schweißkopf (104) und vorzugsweise ein mit dem Schweißkopf (104) verbundenes Griffteil (108) umfasst.

9. Orbitalschweißvorrichtung nach einem der Ansprüche 1 bis 8,
**dadurch gekennzeichnet, dass** die Orbitalschweißvorrichtung (100, 101) eine Elektrodenumlaufmechanik (172) und einen Elektrodenantrieb (124), insbesondere Motor, zum Antrieb der Elektrodenumlaufmechanik (172) aufweist, wobei die Elektrodenumlaufmechanik (172) dazu eingerichtet ist, eine Schweißelektrode (126) oder eine Elektroden-Halterung (306) dafür in Umfangsrichtung um die Aufnahme (106) herum zu verfahren.

10. Orbitalschweißvorrichtung nach einem der Ansprüche 1 bis 9,
**dadurch gekennzeichnet,**
- **dass** der Schweißkopf (104) ein Elektroden-Ringsegment (302) aufweist, das in Umfangsrichtung um die Aufnahme (106) angeordnet und derart gelagert ist, dass das Elektroden-Ringsegment (302) um eine gedachte Längsachse (A) der Aufnahme drehbar ist,
- **dass** das Elektroden-Ringsegment (302) eine Elektroden-Halterung (306) für eine Schweißelektrode (126) und/oder eine Schweißelektrode (126) aufweist und
- **dass** der Schweißkopf (104) mehrere angetriebene Antriebsräder (310, 312) aufweist, die derart angeordnet sind, dass in jeder Drehstellung des Elektroden-Ringsegments (302) um die gedachte Längsachse (A) mindestens eines der mehreren Antriebsräder (310, 312) mit dem Elektroden-Ringsegment (302) gekoppelt ist.

11. Orbitalschweißvorrichtung nach einem der Ansprüche 1 bis 10,
**dadurch gekennzeichnet, dass** die Orbitalschweißvorrichtung (100, 101) eine Schweißstromquelle (126) umfasst, die elektrisch mit dem Elektroden-Ringsegment (302), der Schweißelektrode (126) und/oder der Elektroden-Halterung (306) dafür verbunden ist.

12. Orbitalschweißvorrichtung nach einem der Ansprüche 1 bis 11,
**dadurch gekennzeichnet, dass** die Orbitalschweißvorrichtung (100, 101) eine Steuereinrichtung (130) aufweist, die dazu eingerichtet ist, die Orbitalschweißvorrichtung (100, 101) derart zu steuern, dass an zwei in der Aufnahme (106) angeordneten Fügepartnern eine Schweißnaht aus einer in Umfangsrichtung verlaufenden Kette (211) von Fügepunkten (210) erzeugt wird.

13. Orbitalschweißvorrichtung nach einem der Ansprüche 1 bis 12,
**dadurch gekennzeichnet, dass** die Orbitalschweißvorrichtung (100, 101) eine Schweißkopf-Stellungs-Sensorik zur Detektion der geöffneten und/oder geschlossenen Stellung des Schweißkopfs (104) aufweist.

14. System (700)
- mit einer Orbitalschweißvorrichtung (100, 101) nach einem der Ansprüche 1 bis 13 und
- mit einem Fitting (152).

15. Orbitalschweißverfahren, insbesondere durchgeführt mit einer Orbitalschweißvorrichtung (100, 101) nach einem der Ansprüche 1 bis 13,
- bei dem zwei zumindest in einem Fügebereich (150) rohrförmige Fügepartner zueinander angeordnet werden, insbesondere im Überlappstoß, und
- bei dem im Fügebereich (150) eine in Umfangsrichtung der Fügepartner verlaufende Kette (211) von Fügepunkten (210) erzeugt wird, die die Fügepartner stoffschlüssig verbindet.
